(19) 

Europäisches Patentamt
European Patent Office
Office européen des brevets

(11) **EP 4 603 887 A1**

(12) **EUROPEAN PATENT APPLICATION**
published in accordance with Art. 153(4) EPC

(43) Date of publication:
**20.08.2025   Bulletin 2025/34**

(21) Application number: **23910280.9**

(22) Date of filing: **19.12.2023**

(51) International Patent Classification (IPC):
***G02B 13/00*** (2006.01)

(52) Cooperative Patent Classification (CPC):
**G02B 13/00; G02B 13/06; G02B 13/18; G03B 9/02; G03B 30/00**

(86) International application number:
**PCT/CN2023/140022**

(87) International publication number:
**WO 2024/140350 (04.07.2024 Gazette 2024/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.12.2022   CN 202211711805**

(71) Applicant: **Huawei Technologies Co., Ltd.
Shenzhen, Guangdong 518129 (CN)**

(72) Inventors:
• **WANG, Qi**
  **Shenzhen, Guangdong 518129 (CN)**
• **ZHANG, Kaiyuan**
  **Shenzhen, Guangdong 518129 (CN)**
• **ZHU, Danli**
  **Shenzhen, Guangdong 518129 (CN)**
• **HAO, Dawei**
  **Shenzhen, Guangdong 518129 (CN)**

(74) Representative: **Isarpatent
Patent- und Rechtsanwälte
Barth Hassa Peckmann & Partner mbB
Friedrichstraße 31
80801 München (DE)**

(54) **CAMERA LENS ASSEMBLY, CAMERA MODULE AND ELECTRONIC DEVICE**

(57)     A lens assembly, a camera module, and an electronic device are provided. The lens assembly includes a plurality of lenses that are sequentially arranged along an optical axis, there are gaps between adjacent lenses, a gap of a smallest length in a direction parallel to the optical axis among the gaps between two adjacent lenses is a first gap, and a first gap of a largest length among a plurality of first gaps is a maximum gap. In this way, a half image height of the lens assembly, a total track length of the lens assembly, and a length of the maximum gap satisfy: 0.35≤(TTL-Dgap)/(2*IMH)≤0.53. In addition, focal powers are properly assigned, so that a first lens and a fifth lens each have a positive focal power, a second lens and a fourth lens each have a negative focal power, a focal length of the first lens and a focal length of the lens assembly satisfy: 1<f1/EFL<3, and a focal length of the sixth lens satisfies: -1<EFL/f6<0.1. The lens assembly constructed to meet the foregoing conditions can implement performance of a wide aperture and a large target surface. This effectively improves imaging quality.

FIG. 2

EP 4 603 887 A1

## Description

This application claims priority to Chinese Patent Application No. 202211711805.8, filed with the China National Intellectual Property Administration on December 29, 2022 and entitled "LENS ASSEMBLY, CAMERA MODULE, AND ELECTRONIC DEVICE", which is incorporated herein by reference in its entirety.

## TECHNICAL FIELD

This application relates to the field of electronic device technologies, and in particular, to a lens assembly, a camera module, and an electronic device.

## BACKGROUND

In recent years, with development of camera technologies, camera modules on electronic consumer products, such as a mobile phone, a tablet computer, a notebook computer, and a wearable device, are gradually miniaturized and thinned, image shooting effect and requirements are increasingly aligned with those of single-lens reflex cameras, and a size and function effect of the camera module have gradually become one of important features of terminal electronic devices.

Currently, the camera module includes a lens assembly and an image sensor. After passing through the lens assembly, light is projected to the image sensor to implement optical-to-electrical conversion for imaging. The lens assembly usually includes a plurality of lenses that are sequentially arranged along an optical axis. Performance of the lens assembly directly determines imaging performance of the camera module. To meet requirements of people for imaging quality, the lens assembly gradually develops toward imaging with a wide aperture and a large target surface. For example, a requirement of a user for capturing details of a scene gradually increases, and therefore a design with the wide aperture becomes particularly important. In addition, an aperture of the camera module directly affects core functions of a camera, such as night photography, video, and background blurring. The wide aperture and the large target surface greatly affect improvement of brightness and resolution. Therefore, a lens assembly featuring both a wide aperture and a large target surface is urgently needed, to improve imaging quality of the camera module.

## SUMMARY

Embodiments of this application provide a lens assembly, a camera module, and an electronic device. The lens assembly implements a design with a wide aperture to meet a requirement of an infinite image shooting scenario, implements a macro image shooting function with a high magnification ratio and resolution, and has a relatively small size and relatively low costs.

According to a first aspect, an embodiment of this application provides a lens assembly. The lens assembly includes a plurality of lenses that are sequentially arranged from an object side to an image side along an optical axis, where there are gaps between any two adjacent lenses, a gap of a smallest length in a direction parallel to the optical axis among the gaps between two adjacent lenses is a first gap, and a first gap of a largest length among a plurality of first gaps is a maximum gap.

The lens assembly satisfies a conditional expression: $0.35 \leq (TTL-Dgap)/(2 * IMH) \leq 0.53$, where IMH is a half image height of the lens assembly, TTL is a total track length of the lens assembly, and Dgap is a length of the maximum gap. As a result, the lens assembly has a relatively small total track length and a relatively large half image height.

The plurality of lenses include at least a first lens, a second lens, a third lens, a fourth lens, a fifth lens, a sixth lens, and a seventh lens that are arranged from the object side to the image side. The first lens and the fifth lens each have a positive focal power, and the second lens and the fourth lens each have a negative focal power.

A focal length f1 of the first lens and a focal length EFL of the lens assembly satisfy a conditional expression: $1 < f1/EFL < 3$, and a focal length f6 of the sixth lens and the focal length EFL of the lens assembly satisfy a conditional expression: $-1 < EFL/f6 < 0.1$. Focal powers of the first lens, the second lens, the fourth lens, the fifth lens, and the sixth lens are properly assigned. In addition, the lens assembly constructed by combining the foregoing conditional expressions can implement a design with a wide aperture and a large target surface. This improves imaging quality.

In a possible implementation, some of the plurality of lenses are located on a side that is of the maximum gap and that faces the object side, and the some lenses are capable of moving along the optical axis, to compress the maximum gap, so that the total track length of the lens assembly is reduced. This implements miniaturization of the lens assembly. When the camera module is in a non-operating state, the some lenses located on the side that is of the maximum gap and that faces the object side may move toward the image side along the optical axis, to compress the maximum gap, so that the total track length of the lens assembly is significantly reduced, and a size of the camera module and space occupied by the camera module is reduced. This implements an ultra-thin architecture of the camera module.

In a possible implementation, the lens assembly satisfies a conditional expression: $0.7 \leq (TTL-Dgap) * TTL/IMH^2 \leq 1.7$. This further ensures that the lens assembly can meet a requirement for the design with both the wide aperture and the large target surface. In addition, when the camera module is in the non-operating state, the lens assembly has a relatively small total track length, so that a length of the camera module in the non-operating state is significantly reduced. This facilitates a thinned design of an electronic device.

In a possible implementation, a range of a quantity N of the lenses is: $7 \leq N \leq 10$. This ensures that the lens assembly has a relatively small total track length, and helps improve design flexibility of the lens assembly, to implement the design with the wide aperture and the large target surface.

In a possible implementation, a range of an f-number F# of the lens assembly is: $1.4 \leq F\# \leq 2.2$. The f-number F# is relatively small, so that the design with the wide aperture of the lens assembly is implemented.

In a possible implementation, a range of a half field of view HFOV of the lens assembly is: $35° < HFOV < 49°$. The lens assembly has a relatively large field of view. In other words, the lens assembly has a relatively large range of view. A wide-angle design of the lens assembly is implemented, and functions of the lens assembly are enriched. This helps implement better image shooting effect and imaging quality.

In a possible implementation, the focal length EFL of the lens assembly and the total track length TTL of the lens assembly satisfy a conditional expression: $0 < EFL/TTL < 1$. While it is ensured that an imaging requirement of the lens assembly is met, the lens assembly has a relatively small total track length. This facilitates a small-sized design of the lens assembly.

In a possible implementation, an Abbe number vd1 of the first lens and an Abbe number vd2 of the second lens satisfy a conditional expression: $vd1-vd2 > 25$. The first lens may be a lens having a low refractive index and a large Abbe number, and the second lens may be a lens having a high refractive index and a small Abbe number. In addition, there is a relatively small difference between the Abbe number of the first lens and the Abbe number of the second lens. Therefore, the first lens and the second lens may each be a lens having a relatively small Abbe number, so that costs are relatively low. This helps reduce costs of the lens assembly.

In addition, both the first lens and the second lens have relatively small Abbe numbers, so that the first lens and the second lens may be relatively thin lenses having relatively good performance. While ensuring performance with both the wide aperture and the large target surface, this helps further reduce thicknesses of the first lens and the second lens, thereby further reducing the total track length of the lens assembly and helping thin the camera module, to obtain an ultra-thin camera module with low costs and good imaging quality.

In a possible implementation, a curvature radius R9 of an object-side surface of the fifth lens and a curvature radius R10 of an image-side surface of the fifth lens satisfy a conditional expression: $R10/R9 > -1$. The focal power of the fifth lens is properly assigned. This further helps implement the requirement for the design with both the wide aperture and the large target surface of the lens assembly.

In a possible implementation, the lenses are aspherical lenses, so that a spherical aberration introduced by spherical lenses can be reduced or avoided, and good compensation effect is achieved for a spherical aberration and distortion. This further helps implement performance with the wide aperture of the lens assembly.

According to a second aspect, an embodiment of this application provides a camera module. The camera module includes an image sensor and the lens assembly according to any one of the possible implementations. The image sensor is located on a side that is of the lens assembly and that faces the image side.

The lens assembly is included, so that the lens assembly can implement a design with a wide aperture and a large target surface. This significantly improves imaging quality of the camera module.

According to a third aspect, an embodiment of this application provides an electronic device. The electronic device includes a housing and the foregoing camera module. The camera module is disposed on the housing.

The camera module is included, and the camera module has excellent imaging quality. This can improve functionality of the electronic device.

In a possible implementation, when the camera module is in an operating state, some lenses in a lens assembly are located outside the housing, so that the lens assembly can implement a requirement for a design with both a wide aperture and a large target surface.

When the camera module switches from the operating state to a non-operating state, some lenses on a side that is of a maximum gap and that faces an object side move toward the inside of the housing, to compress the maximum gap in the lens assembly, so that the lens assembly is in a compressed state. In this way, a thickness of the camera module in the non-operating state is reduced, and space occupied by the camera module in a thickness direction of the electronic device is reduced. This implements a thinned design of the electronic device, and improves aesthetics of the electronic device.

**BRIEF DESCRIPTION OF DRAWINGS**

FIG. 1 is a diagram of a structure of an electronic device according to an embodiment of this application;
FIG. 2 is a diagram of a camera module in an operating state according to an embodiment of this application;
FIG. 3 is a diagram of a camera module in a non-operating state according to an embodiment of this application;
FIG. 4 is a simulation diagram of a camera module in an operating state according to Embodiment 1 of this application;
FIG. 5 is a curve diagram of an axial chromatic aberration of a lens assembly according to Embodiment 1 of this application;
FIG. 6 is a diagram of astigmatism and field curvature of a lens assembly according to Embodiment 1 of this application;
FIG. 7 is a distortion curve diagram of a lens assembly according to Embodiment 1 of this application;
FIG. 8 is a simulation diagram of a camera module in an operating state according to Embodiment 2 of this application;
FIG. 9 is a curve diagram of an axial chromatic aberration of a lens assembly according to Embodiment 2 of this application;
FIG. 10 is a diagram of astigmatism and field curvature of a lens assembly according to Embodiment 2 of this application;
FIG. 11 is a distortion curve diagram of a lens assembly according to Embodiment 2 of this application;
FIG. 12 is a simulation diagram of a camera module in an operating state according to Embodiment 3 of this application;
FIG. 13 is a curve diagram of an axial chromatic aberration of a lens assembly according to Embodiment 3 of this application;
FIG. 14 is a diagram of astigmatism and field curvature of a lens assembly according to Embodiment 3 of this application;
FIG. 15 is a distortion curve diagram of a lens assembly according to Embodiment 3 of this application;
FIG. 16 is a simulation diagram of a camera module in an operating state according to Embodiment 4 of this application;
FIG. 17 is a curve diagram of an axial chromatic aberration of a lens assembly according to Embodiment 4 of this application;
FIG. 18 is a diagram of astigmatism and field curvature of a lens assembly according to Embodiment 4 of this application;
FIG. 19 is a distortion curve diagram of a lens assembly according to Embodiment 4 of this application;
FIG. 20 is a simulation diagram of a camera module in an operating state according to Embodiment 5 of this application;
FIG. 21 is a curve diagram of an axial chromatic aberration of a lens assembly according to Embodiment 5 of this application;
FIG. 22 is a diagram of astigmatism and field curvature of a lens assembly according to Embodiment 5 of this application;
FIG. 23 is a distortion curve diagram of a lens assembly according to Embodiment 5 of this application;
FIG. 24 is a simulation diagram of a camera module in an operating state according to Embodiment 6 of this application;
FIG. 25 is a curve diagram of an axial chromatic aberration of a lens assembly according to Embodiment 6 of this application;
FIG. 26 is a diagram of astigmatism and field curvature of a lens assembly according to Embodiment 6 of this application;
FIG. 27 is a distortion curve diagram of a lens assembly according to Embodiment 6 of this application;
FIG. 28 is a simulation diagram of a camera module in an operating state according to Embodiment 7 of this application;
FIG. 29 is a curve diagram of an axial chromatic aberration of a lens assembly according to Embodiment 7 of this application;
FIG. 30 is a diagram of astigmatism and field curvature of a lens assembly according to Embodiment 7 of this application;
FIG. 31 is a distortion curve diagram of a lens assembly according to Embodiment 7 of this application;
FIG. 32 is a simulation diagram of a camera module in an operating state according to Embodiment 8 of this application;
FIG. 33 is a curve diagram of an axial chromatic aberration of a lens assembly according to Embodiment 8 of this application;
FIG. 34 is a diagram of astigmatism and field curvature of a lens assembly according to Embodiment 8 of this application; and
FIG. 35 is a distortion curve diagram of a lens assembly according to Embodiment 8 of this application.

Reference numerals:

100: electronic device;
101: camera module;
10: lens assembly; 11: first lens; 12: second lens; 13: third lens; 14: fourth lens; 15: fifth lens; 16: sixth lens; 17: seventh lens;
20: image sensor; 30: optical filter; 40: aperture stop;
102: housing;
103: loudspeaker port;
104: data interface.

## DESCRIPTION OF EMBODIMENTS

Terms used in embodiments of this application are only used to explain specific embodiments of this application, but are not intended to limit this application.

For ease of understanding, related technical terms in embodiments of this application are first explained and described.

A focal length, also referred to as a focal length, is a measurement manner for measuring convergence or divergence of light in an optical system, and means a vertical distance from an optical center of a lens or a lens group to a focal plane when a clear image of an infinite scene is formed on the focal plane through the lens or the lens group. From a practical perspective, the focal length may be understood as a distance from a center of a lens (a lens assembly) to an image plane.

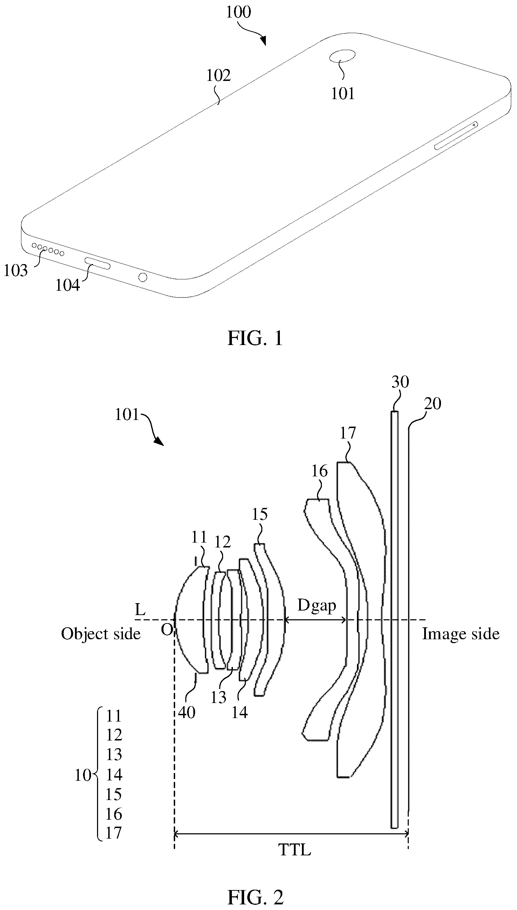

An optical axis is light (referring to L in FIG. 2) passing through a center of each lens of the lens assembly.

Field of view (Field of View, FOV for short): An included angle that uses a lens as a vertex and that is formed by using two edges of a maximum range in which an image of a photographed object can pass through the lens is referred to as the field of view. The field of view is used to determine a range of a visual field of a lens. A larger field of view indicates a larger visual field. A half field of view (Half Field of View, HFOV for short) is half of the field of view.

An aperture is an apparatus configured to control an amount of light passing through a lens and entering an electronic device, and is usually in the lens. A size of the aperture is represented by an F# value.

An f-number F# is a relative value (reciprocal of a relative aperture) obtained by dividing a focal length of a lens by a diameter of a clear aperture of the lens. A smaller value of the f-number F# indicates a larger amount of light that enters in same unit time, a smaller depth of field, and blurring of photographed background content, to generate effect similar to that of a long-focus lens.

A focal power represents a refraction capability of a lens on an incident parallel light beam.

A positive focal power means that a lens has a positive focal length and has effect of converging light.

A negative focal power means that a lens has a negative focal length and has effect of diverging light.

Object side: A lens assembly is used as a boundary, one side on which a photographed object is located is the object side, and one surface that is of a lens and that faces the object side is an object-side surface of the lens.

Image side: One side on which an image of a photographed object is located is the image side, and one surface that is of a lens and that faces the image side is an image-side surface.

A total track length (Total Track Length, TTL for short) is a total length from a vertex of a first lens that is disposed on an adjacent object side of a lens assembly to an imaging surface of the lens assembly. In this application, TTL may be a distance (referring to FIG. 2) from an object-side surface (O) of the first lens to a photosensitive surface of an image sensor on optical axes of a plurality of lenses in the lens assembly.

An image height (Image Height, IH) is a full-image height of an image formed by a lens assembly. A half image height (Half Image Height, IMH for short) is half of the image height.

A target surface is a photosensitive surface of an image sensor. A larger target surface indicates a larger amount of light sensed by the image sensor and a larger image height of imaging.

An Abbe number is also referred to as a dispersion coefficient, is a difference ratio of refractive indexes of an optical material at different wavelengths, and indicates a dispersion degree of the material.

A refractive index is a ratio of a speed of light in the air to a speed of light in an optical material. A higher refractive index of the optical material indicates a stronger refraction capability of incident light and a thinner lens. Usually, a higher refractive index of a lens indicates a smaller Abbe number of the lens.

Curvature radius: The curvature radius is mainly used to describe a bending degree of a part of a curve. A larger circle radius indicates a smaller bending degree.

Axial aberration: An aberration formed when a beam of light parallel to an optical axis converges at different positions after passing through a lens is referred to as a position chromatic aberration or an axial aberration (axial chromatic aberration). A reason is as follows: A lens assembly images light with different wavelengths at different positions. As a result, focal planes of images of light of different colors cannot overlap during final imaging, causing dispersion due to scattering of polychromatic light.

Astigmatism: Because a luminous object point is not on an optical axis of an optical system, a light beam emitted by the luminous object point has an oblique angle to the optical axis. After the light beam is refracted by a lens, a convergence point of a meridianal fine light beam of the light beam and a convergence point of a sagittal fine light beam is not at a same point, that is, the light beams cannot be focused on one point. As a result, an image is not clear, resulting in astigmatism.

Distortion, also referred to as distortion, is a degree of distortion of an image of a photographed object generated by a lens assembly relative to the photographed object. A height of a point at which chief rays of different fields of view intersect with a Gaussian image plane after passing through a lens assembly is not equal to an ideal image height, and a difference between the two is distortion.

An embodiment of this application provides an electronic device. The electronic device may include but is not limited to an electronic device having a camera module, such as a mobile phone, a tablet computer, a notebook computer, an ultra-mobile personal computer (ultra-mobile personal computer, UMPC), a handheld computer, an intercom, a netbook, a POS terminal, a personal digital assistant (personal digital assistant, PDA), a wearable device, a virtual reality device, or a vehicle-mounted apparatus.

In this embodiment of this application, an example in which the electronic device is a mobile phone is used. The mobile phone may be a bar phone or a foldable phone. Specifically, the following uses an example in which the electronic device is a bar phone for description.

FIG. 1 is a diagram of a structure of an electronic device according to an embodiment of this application.

Refer to FIG. 1. An electronic device 100 may include a housing 102 and a camera module 101. The camera module 101 may be disposed on the housing 102, and the camera module 101 is configured to implement an image shooting function.

The camera module 101 may be located on a front side (a side having a display screen) of the electronic device 100, and is configured to take a selfie or shoot another object. Alternatively, refer to FIG. 1. The camera module 101 may be located on a back side (a side facing away from a display screen) of the electronic device 100, and is configured to shoot another object, or certainly may be configured to take a selfie.

The electronic device 100 may include one or more camera modules 101, to meet different image shooting requirements.

The electronic device 100 may further include another component. For example, still refer to FIG. 1. The housing 102 of the electronic device 100 may further be provided with a loudspeaker port 103. The loudspeaker port 103 may be configured to play audio and the like of the electronic device 100. The housing 102 of the electronic device 100 may further be provided with a data interface 104. The data interface 104 may be configured to supply power to the electronic device 100, or may be configured to connect the electronic device 100 to a headset, an external multimedia device, or the like (for example, an external camera or an external projection device).

Certainly, in some other examples, the electronic device 100 may further include another component, for example, a sensor, a processor, a circuit board, or a drive structure, to complete a function of the electronic device. This is not limited in this embodiment of this application.

Usually, the camera module may include a lens assembly and an image sensor. Light may enter the camera module from the lens assembly. Specifically, light reflected by a photographed object may enter the lens assembly. The light passes through the lens assembly to adjust and control an optical path, and then a light image is generated and transmitted onto a photosensitive surface of the image sensor. The image sensor can implement an optical-to-electrical conversion function. The image sensor receives the light image and converts the light image into an electrical signal for imaging display.

The camera module may further include an image processor, a memory, and the like. The image sensor may transmit the electrical signal to the image processor and the memory for processing, and then display an image of the photographed object by using the display screen of the electronic device.

Optical performance of the lens assembly greatly affects imaging quality and effect of the camera module. For example, an f-number of the lens assembly affects functions such as night scene shooting, video, background blurring, and snapshot taking. In other words, a camera module using a wide aperture has better imaging quality and imaging effect in scenarios such as night scene shooting, video, background blurring, and snapshot taking.

A size of a target surface of the lens assembly is also one of important factors that affect imaging quality. A camera module with a large target surface helps improve imaging brightness and resolution of the camera module and obtain better imaging quality. Therefore, imaging with the wide aperture and the large target surface becomes one of important development trends of the lens assembly in the electronic device such as a mobile phone.

In addition, with development of lightness and thinness of the electronic device, a requirement for a thinned design of the camera module is increasingly higher, and a design of a low total height of the lens assembly is also particularly important. The low total height means that the lens assembly has a relatively small total track length, to reduce space occupied by the lens assembly. A design with the wide aperture and the large target surface usually causes an increase in the total track length of the lens assembly. As a result, space required by the entire camera module in a thickness direction of the electronic device is relatively large. This is not conducive to a thinned design of the electronic device.

Based on this, an embodiment of this application provides a lens assembly. The lens assembly implements a design with a wide aperture and a large target surface, and has high imaging quality. In addition, when the camera module is in a non-operating state, the lens assembly can implement an ultra-thin architecture, to meet a requirement for a miniaturization design of the camera module. This facilitates thinning of the electronic device.

With reference to the accompanying drawings, the following describes in detail the lens assembly and the camera module including the lens assembly provided in this embodiment of this application.

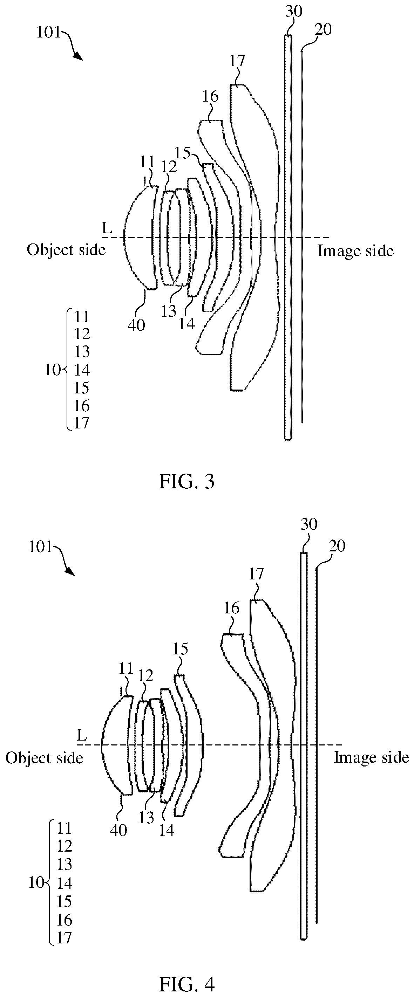

FIG. 2 is a diagram of a camera module in an operating state according to an embodiment of this application. FIG. 3 is a diagram of a camera module in a non-operating state according to an embodiment of this application.

Refer to FIG. 2. A camera module 101 provided in this embodiment of this application includes a lens assembly 10 and an image sensor 20. The image sensor 20 is located on a side that is of the lens assembly 10 and that faces an image side. A photosensitive surface (which may also be referred to as an imaging surface) of the image sensor 20 may face the lens assembly 10. Light entering the camera module 101 from the lens assembly 10 may be transmitted onto the photosensitive surface of the image sensor 20 after passing through the lens assembly 10, to implement imaging of the light.

The image sensor 20 may be a charge-coupled device (Charge-coupled Device, CCD), a complementary metal-oxide-semiconductor (Complementary Metal-Oxide-Semiconductor, CMOS), or another device that can implement an optical-to-electrical conversion function.

Still refer to FIG. 2. The camera module 101 may further include an optical filter 30. The optical filter 30 may be located between the lens assembly 10 and the image sensor 20, and the light passing through the lens assembly 10 is transmitted onto the photosensitive surface of the image sensor 20 after passing through the optical filter 30. The optical filter 30 has a light filtering function, and enables light within a specific wavelength range to pass through, to filter out stray light that is not conducive to imaging. This helps improve imaging quality.

The camera module 101 may further include an aperture stop 40. The aperture stop 40 may implement a function of adjusting light intensity, to improve definition, brightness, and the like of imaging. This improves imaging quality. The aperture stop 40 may be located on a side that is of the lens assembly 10 and that faces an object side. Certainly, in some other examples, the aperture stop 40 may be located between two adjacent lenses in the lens assembly 10.

For example, the aperture stop 40 is located on the side that is of the lens assembly 10 and that faces the object side. Refer to FIG. 2. A dashed line L in FIG. 2 represents an optical axis of the lens assembly 10. The aperture stop 40, the lens assembly 10, the optical filter 30, and the image sensor 20 may be sequentially arranged from the object side to the image side along the optical axis. The light enters the camera module 101, sequentially passes through the aperture stop 40, the lens assembly 10, and the optical filter 30, and then is transmitted onto the photosensitive surface of the image sensor 20, to be received by the image sensor 20 and form an image.

The camera module 101 may further include a lens barrel (not shown in the figure), and the aperture stop 40, the lens assembly 10, the optical filter 30, the image sensor 20, and the like may be disposed in the lens barrel.

The lens assembly 10 may include a plurality of lenses, and each lens may have a focal power. The plurality of lenses may be sequentially arranged from the object side to the image side along the optical axis and spaced from each other, and the optical axis of the lens assembly 10 may coincide with a central axis of the lens barrel.

Specifically, the lens assembly 10 may include at least a first lens 11, a second lens 12, a third lens 13, a fourth lens 14, a fifth lens 15, a sixth lens 16, and a seventh lens 17 that are sequentially arranged from the object side to the image side along the optical axis. In other words, the lens assembly 10 includes at least seven lenses.

It should be understood that the lens assembly 10 may include only seven lenses, or the lens assembly 10 may further include another quantity of lenses in addition to the foregoing seven lenses. In other words, a quantity of the lenses may be N. The lens assembly 10 may include a first lens 11, a second lens 12, a third lens 13, ..., and an $N^{th}$ lens that are sequentially arranged from the object side to the image side along the optical axis, where $N \geq 7$.

A value of the quantity N of the lens assemblies 10 may be: $7 \leq N \leq 10$. This ensures that the lens assembly 10 has a relatively small total track length, and helps improve design flexibility of the lens assembly 10, to implement a design with a wide aperture and a large target surface.

For the N lenses included in the lens assembly 10, a lens located at an end that is of the lens assembly 10 and that is close to the object side is the first lens 11; from the object side to the image side, a lens adjacent to the first lens 11 is the second lens 12, and so on; and a lens located at an end that is of the lens assembly 10 and that is close to the image side is the $N^{th}$ lens. For example, as shown in FIG. 2, the lens assembly 10 includes the seven lenses. In this case, N=7. The first lens 11 is disposed close to the object side, and the seventh lens 17 is disposed close to the image side.

The following describes the lens assembly 10 by using an example in which the lens assembly 10 includes the first lens 11, the second lens 12, the third lens 13, the fourth lens 14, the fifth lens 15, the sixth lens 16, and the seventh lens 17.

Refer to FIG. 2. The plurality of lenses are spaced from each other, and there are gaps between each two adjacent lenses. In other words, there are gaps between any two adjacent lenses in the lens assembly 10. It should be understood that an object-side surface and an image-side surface of a lens are mostly curved surfaces, for example, arc-shaped surfaces, S-shaped surfaces, or M-shaped surfaces. In some other examples, an object-side surface and an image-side surface may be some irregular curved surfaces. Therefore, gaps between two opposite surfaces of two adjacent lenses in a direction parallel to the optical axis may be of different lengths. In this application, a gap of a smallest length in the direction parallel to the optical axis among gaps between two opposite surfaces of the two adjacent lenses is a first gap. In other words, the first gap is a minimum distance between the two lenses in the direction parallel to the optical axis.

There is a first gap between any two adjacent lenses in the lens assembly 10. In other words, there are a plurality of first gaps in the lens assembly 10. A gap of a largest length among the plurality of first gaps is a maximum gap in this application.

For example, as shown in FIG. 2, a first gap between the fifth lens 15 and the sixth lens 16 is of a largest length. In other words, a length of the first gap between the fifth lens 15 and the sixth lens 16 in the direction parallel to the optical axis is greater than a length of a first gap between any two lenses in the lens assembly 10 in the direction parallel to the optical axis. In this case, the first gap between the fifth lens 15 and the sixth lens 16 is the maximum gap. In other words, a maximum gap Dgap is between the fifth lens 15 and the sixth lens 16. In the example in FIG. 2, the maximum gap Dgap is a first gap as which a gap between the fifth lens 15 and the sixth lens 16 in a direction of the optical axis is used. In other words, a gap of a smallest length between the fifth lens 15 and the sixth lens 16 in the direction parallel to the optical axis is a position indicated as Dgap. However, it may be understood that, in another possible embodiment, the first gap between the fifth lens 15 and the sixth lens 16 may be another gap in the direction parallel to the optical axis, but not necessarily the gap in the direction of the optical axis.

It should be understood that the maximum gap may be between any two adjacent lenses, in other words, a first gap of a largest length may be between any two adjacent lenses. For example, in some other examples, the maximum gap may be between the first lens 11 and the second lens 12, the maximum gap may be between the second lens 12 and the third lens 13, the maximum gap may be between the third lens 13 and the fourth lens 14, the maximum gap may be between the fourth lens 14 and the fifth lens 15, or the maximum gap may be between a sixth gap and the seventh lens.

The lens assembly 10 may satisfy a conditional expression: $0.35 \leq (TTL-Dgap)/(2*IMH) \leq 0.53$, where IMH is a half image height of the lens assembly 10, TTL is a total track length of the lens assembly 10, and Dgap is a length of the maximum gap. As a result, the lens assembly 10 has a relatively small total track length and a relatively large half image height.

In addition, the first lens 11 may have a positive focal power. A focal length of the first lens 11 is f1, and a focal length of the lens assembly 10 is EFL. The focal length f1 of the first lens 11 and the focal length EFL of the lens assembly 10 may satisfy a conditional expression: $1<f1/EFL<3$.

The second lens 12 may have a negative focal power, the fourth lens 14 may have a negative focal power, and the fifth lens 15 may have a positive focal power.

A focal length of the sixth lens 16 is f6. The focal length of the sixth lens 16 and the focal length EFL of the lens assembly 10 may satisfy a conditional expression: $-1<EFL/f6<0.1$. As a result, focal powers of the first lens 11, the second lens 12, the fourth lens 14, the fifth lens 15, and the sixth lens 16 are properly assigned, so that the lens assembly 10 can implement the design with both the wide aperture and the large target surface. This improves imaging quality. In addition, the combination of the foregoing focal powers can further implement aberration correction. This further helps improve imaging quality.

Still refer to FIG. 2. The maximum gap is between two adjacent lenses. In this case, some of the plurality of lenses are located on a side that is of the maximum gap and that faces the object side. For example, the maximum gap is between the fifth lens 15 and the sixth lens 16, and the first lens 11, the second lens 12, the third lens 13, the fourth lens 14, and the fifth lens 15 are located on the side that is of the maximum gap and that faces the object side.

It should be noted that the total track length TTL of the lens assembly 10 is a total track length for the camera module 101 in an operating state. For example, as shown in the camera module 101 in FIG. 2, the total track length TTL of the lens assembly 10 is a distance between an object-side surface (O) of the first lens 11 and the photosensitive surface of the image sensor 20 when the maximum gap of the largest length is between the fifth lens 15 and the sixth lens 16.

To meet a thinned design of the camera module 101, the some lenses located on the side that is of the maximum gap and that faces the object side is movably disposed. The some lenses can move along the optical axis. For example, the first lens 11, the second lens 12, the third lens 13, the fourth lens 14, and the fifth lens 15 can move along the optical axis.

In this embodiment of this application, when the camera module 101 is not used to perform an operation such as image shooting, a state of the camera module 101 is a non-operating state; or when the camera module 101 is used to perform an operation such as image shooting, a state of the camera module 101 is an operating state.

When the camera module 101 is in the non-operating state, the some lenses located on the side that is of the maximum gap and that faces the object side may move toward the image side along the optical axis, to compress the maximum gap, so that the total track length of the lens assembly 10 is significantly reduced, and a size of the camera module 101 and space occupied by the camera module 101 is reduced. This implements an ultra-thin architecture of the camera module 101.

When the camera module 101 is in the operating state, the some lenses located on the side that is of the maximum gap and that faces the object side may move toward the object side along the optical axis, to meet an imaging requirement of the lens assembly 10. In this way, the lens assembly 10 can implement high imaging quality with both the wide aperture and the large target surface, and the total track length of the lens assembly 10 is relatively small in this case.

For example, as shown in FIG. 2, when the camera module 101 is in the operating state, fixed gaps may remain between the lenses in the lens assembly 10, and the maximum gap of the largest length may be between the fifth lens 15 and the sixth lens 16. The lens assembly 10 may meet a high imaging quality requirement with the wide aperture and the large target surface.

When the camera module 101 switches from the operating state to the non-operating state, the first lens 11, the second lens 12, the third lens 13, the fourth lens 14, and the fifth lens 15 may move along the optical axis, to compress the maximum gap. With reference to FIG. 3, the entire lens assembly 10 is in a compressed state, so that the total track length of the lens assembly 10 is further effectively reduced.

The lenses move to compress the maximum gap of the largest length, so that the total track length of the lens assembly 10 can be more effectively reduced through compression. In this way, the entire lens assembly 10 has a shorter length.

The some lenses located on the side that is of the maximum gap and that faces the object side may move along the optical axis, for example, move toward the object side or the image side along the optical axis. In addition, distances between the lenses can be adjusted. For example, distances between the some lenses and another lens, such as distances between the first lens 11, the second lens 12, the third lens 13, the fourth lens 14, and the fifth lens 15, and the sixth lens 16 and the seventh lens 17 in FIG. 3, are adjusted. In this way, the focal length of the lens assembly 10 is changed, a focusing function is implemented, and normal focus at different object distances is achieved. This further improves imaging quality. In addition, the maximum gap of the largest length can further provide relatively large moving space for the lenses to move. This meets a relatively large focusing requirement.

It may be understood that there may be one lens on the side that is of the maximum gap and that faces the object side. For example, when the maximum gap is between the first lens 11 and the second lens 12, the lens on the side that is of the maximum gap and that faces the object side is the first lens 11, and only the first lens 11 moves. Alternatively, there may be a plurality of lenses on the side that is of the maximum gap and that faces the object side. For example, when the maximum gap is between the second lens 12 and the third lens 13, or between the third lens 13 and the fourth lens 14, or between the fourth lens 14 and the fifth lens 15, or between the sixth lens 16 and the seventh lens 17, there are two or more lenses on the side that is of the maximum gap and that faces the object side.

It should be noted that, when there are a plurality of lenses on the side that is of the maximum gap and that faces the object side, the lenses may move as a whole. For example, with reference to FIG. 2 and FIG. 3, the maximum gap is between the fifth lens 15 and the sixth lens 16. The first lens 11, the second lens 12, the third lens 13, the fourth lens 14, and the fifth lens 15 may be used as a lens group, for example, a first lens group, and the sixth lens 16 and the seventh lens 17 may be used as a lens group, for example, a second lens group. The entire first lens group may move along the optical axis relative to the second lens group, to implement compression of the maximum gap and a focusing function.

Alternatively, the lenses may move separately. For example, the maximum gap is still between the fifth lens 15 and the sixth lens 16. The first lens 11, the second lens 12, the third lens 13, the fourth lens 14, and the fifth lens 15 may move toward the image side or the object side separately, to implement compression of the maximum gap and a focusing function.

The camera module 101 is used in an electronic device, and an arrangement direction of the lenses in the lens assembly 10, namely, the direction of the optical axis, may be consistent with a thickness direction of the electronic device. When the camera module 101 is in the operating state, some lenses in the lens assembly 10 may be located outside the housing, so that the lens assembly 10 can implement a requirement for the design with both the wide aperture and the large target surface.

It should be understood that, when the camera module 101 is in the operating state, the some lenses located on the side that is of the maximum gap and that faces the object side may be all located outside the housing, or the some lenses located on the side that is of the maximum gap and that faces the object side may be only partially located outside the housing.

Alternatively, in some other examples, the lenses on the side that is of the maximum gap and that faces the object side and some lenses on a side that is of the maximum gap and that faces the image side may be located outside the housing.

When the camera module 101 switches from the operating state to the non-operating state, the lenses on the side that is of the maximum gap and that faces the object side move toward the image side, that is, toward the inside of the housing, to compress the maximum gap, so that the lens assembly 10 is in a compressed state. In this way, a thickness of the camera module 101 in the non-operating state is reduced, and space occupied by the camera module 101 in a thickness direction of the electronic device is reduced. This implements a thinned design of the electronic device, and improves aesthetics of the electronic device.

When the camera module 101 is in the non-operating state, all of the lenses in the lens assembly 10 may be located in the housing. Alternatively, in some other examples, some lenses in the lens assembly 10 may be located outside the housing.

To further reduce a length of the lens assembly 10, the lens assembly 10 may satisfy a conditional expression: $0.7 \leq (TTL-Dgap) * TTL/IMH^2 \leq 1.7$. It may be understood that the length of the maximum gap subtracted from the total track length TTL of the lens assembly 10 equals a total track length for the lens assembly 10 in the non-operating state. The lens assembly 10 satisfies the foregoing conditional expression. This further ensures that the lens assembly 10 can meet the requirement for the design with both the wide aperture and the large target surface. In addition, when the camera module 101 is in the non-operating state, the lens assembly 10 has a relatively small total track length, so that a length of the camera module 101 in the non-operating state is significantly reduced. This facilitates the thinned design of the electronic device 100.

A range of an f-number F# of the lens assembly 10 is: $1.4 \leq F\# \leq 2.2$. The f-number F# is relatively small, so that the design with the wide aperture of the lens assembly 10 is implemented.

A range of a half field of view of the lens assembly 10 is: $35° < HFOV < 49°$. The lens assembly 10 has a relatively large field of view. In other words, the lens assembly 10 has a relatively large range of view. A wide-angle design of the lens assembly 10 is implemented, and functions of the lens assembly 10 are enriched. This helps implement better image shooting effect and imaging quality.

The focal length of the lens assembly 10 is EFL. The focal length EFL of the lens assembly 10 and the total track length TTL of the lens assembly 10 may satisfy a conditional expression: $0 < EFL/TTL < 1$. While it is ensured that an imaging requirement of the lens assembly 10 is met, the lens assembly 10 has a relatively small total track length. This facilitates a small-sized design of the lens assembly 10.

In the lens assembly 10, an Abbe number of the first lens 11 is vd1, and an Abbe number of the second lens 12 is vd2. The Abbe number vd1 of the first lens 11 and the Abbe number vd2 of the second lens 12 may satisfy a conditional expression: $vd1-vd2 > 25$, and the Abbe number of the second lens 12 may be smaller than the Abbe number of the first lens 11. In this case, a refractive index of the second lens 12 may be higher than a refractive index of the first lens 11. The first lens 11 may be a lens having a low refractive index and a large Abbe number, and the second lens 12 may be a lens having a high refractive index and a small Abbe number. In addition, there is a relatively small difference between the Abbe number of the first lens 11 and the Abbe number of the second lens 12. Therefore, the first lens 11 and the second lens 12 may each be a lens having a relatively small Abbe number, for example, a plastic lens, so that costs are relatively low. This helps reduce costs of the lens assembly 10.

In addition, both the first lens 11 and the second lens 12 have relatively small Abbe numbers, so that the first lens 11 and the second lens 12 may be relatively thin lenses having relatively good performance. While ensuring performance of both the wide aperture and the large target surface, this helps further reduce thicknesses of the first lens 11 and the second lens 12, thereby further reducing the total track length of the lens assembly 10 and helping thin the camera module 101, to obtain an ultra-thin camera module 101 with low costs and good imaging quality.

In the lens assembly 10, a curvature radius of an object-side surface of the fifth lens 15 is R9, and a curvature radius of an image-side surface of the fifth lens 15 is R10. The curvature radius R9 of the object-side surface of the fifth lens 15 and the curvature radius R10 of the image-side surface of the fifth lens 15 may satisfy a conditional expression: $R10/R9 > -1$. The focal power of the fifth lens 15 is properly assigned. This further helps implement the requirement for the design with both the wide aperture and the large target surface of the lens assembly 10.

The plurality of lenses in the lens assembly 10 may all be aspherical lenses, so that a spherical aberration introduced by spherical lenses can be reduced or avoided, and good compensation effect is achieved for a spherical aberration and distortion. This further helps implement performance with the wide aperture of the lens assembly 10.

The following describes a structure and performance of the lens assembly provided in this application with reference to specific embodiments.

Embodiment 1

FIG. 4 is a simulation diagram of a camera module in an operating state according to Embodiment 1 of this application.

In this embodiment, refer to FIG. 3. A quantity N of lenses in a lens assembly may be 7, and a first lens 11, a second lens 12, a third lens 13, a fourth lens 14, a fifth lens 15, a sixth lens 16, and a seventh lens 17 may be sequentially arranged from an object side to an image side along an optical axis.

There is a maximum gap between the fifth lens 15 and the sixth lens 16.

A half image height IMH of the lens assembly 10 is 6.47 mm, a total track length TTL of the lens assembly 10 is 7.86 mm, and the maximum gap Dgap is 2.06 mm. The half image height IMH of the lens assembly 10, the total track length TTL of the lens assembly 10, and the maximum gap Dgap satisfy: $(TTL-Dgap) * TTL/IMH^2 = 1.09$, and $(TTL-Dgap)/(2 * IMH) = 0.45$.

When the camera module 101 is in a non-operating state, the maximum gap is compressed, and the total track length of the lens assembly 10 is: $TTL-Dgap=5.8$ mm.

The first lens 11 has a positive focal power, and a focal length f1 of the first lens 11 is 6.76 mm. A focal length EFL of the lens assembly 10 is 6.67 mm. The focal length f1 of the first lens 11 and the focal length EFL of the lens assembly 10 satisfy: $f1/EFL=1.01$.

The second lens 12 has a negative focal power, and a focal length f2 of the second lens 12 is -28.39 mm.

The fourth lens 14 has a negative focal power, and a focal length f4 of the fourth lens 14 is -27.13 mm.

The fifth lens 15 has a positive focal power, and a focal length f5 of the fifth lens 15 is 7.09 mm.

A focal length f6 of the sixth lens 16 is -283.13 mm. The focal length f6 of the sixth lens 16 and the focal length EFL of the lens assembly 10 satisfy: $EFL/f6=-0.02$.

An f-number F# of the lens assembly 10 is 1.88.

A half field of view HFOV of the lens assembly 10 is 43.29°.

The total track length TTL of the lens assembly 10 and the focal length EFL of the lens assembly 10 satisfy: $EFL/TTL=0.85$.

An Abbe number vd1 of the first lens 11 is 81.56, and an Abbe number vd2 of the second lens 12 is 18.82. The Abbe number vd1 of the first lens 11 and the Abbe number vd2 of the second lens 12 satisfy: $vd1-vd2=62.74$.

A curvature radius R9 of an object-side surface of the fifth lens 15 is 15.29 mm, and a curvature radius R10 of an image-side surface of the fifth lens 15 is -5.11 mm. The curvature radius R9 of the object-side surface of the fifth lens 15 and the curvature radius R10 of the image-side surface of the fifth lens 15 satisfy: $R10/R9=-0.33$.

Table 1 shows optical parameters of optical elements in the camera module according to Embodiment 1 of this application.

| | | R | | d | | nd | | vd | |
|---|---|---|---|---|---|---|---|---|---|
| S1 | R0 | ∞ | d0 | -0.70 | | | | | |
| L1 | R1 | 2.45 | d1 | 0.94 | nd1 | 1.50 | vd1 | 81.56 |
| | R2 | 7.85 | d2 | 0.25 | | | | |
| L2 | R3 | 24.47 | d3 | 0.28 | nd2 | 1.68 | vd2 | 18.82 |
| | R4 | 10.72 | d4 | 0.43 | | | | |
| L3 | R5 | 11.49 | d5 | 0.31 | nd3 | 1.69 | vd3 | 18.10 |
| | R6 | 8.97 | d6 | 0.23 | | | | |
| L4 | R7 | -6.49 | d7 | 0.51 | nd4 | 1.63 | vd4 | 23.63 |
| | R8 | -10.77 | d8 | 0.16 | | | | |
| L5 | R9 | 15.29 | d9 | 0.57 | nd5 | 1.55 | vd5 | 55.92 |
| | R10 | *-5.11* | d10 | 2.06 | | | | |
| L6 | R11 | 17.71 | d11 | 0.40 | nd6 | 1.68 | vd6 | 19.24 |
| | R12 | 16.07 | d12 | 0.33 | | | | |
| L7 | R13 | -9.54 | d13 | 0.45 | nd7 | 1.57 | vd7 | 37.40 |
| | R14 | 5.14 | d14 | 0.34 | | | | |
| IR | R15 | ∞ | d15 | 0.21 | ndg | 1.52 | vdg | 64.17 |
| | R16 | ∞ | d16 | 0.39 | | | | |

L1 is the first lens 11, L2 is the second lens 12, L3 is the third lens 13, L4 is the fourth lens 14, L5 is the fifth lens 15, L6 is the sixth lens 16, L7 is the seventh lens 17, S1 is an aperture stop 40, and IR is an optical filter 30.

R is a curvature radius of an optical element (for example, a lens or the optical filter) at a corresponding position on the optical axis. R0 is a curvature radius of the aperture stop 40; R1 and R2 are respectively curvature radiuses of the first lens 11 on an object-side surface and an image-side surface; R3 and R4 are respectively curvature radiuses of the second lens 12 on an object-side surface and an image-side surface; R5 and R6 are respectively curvature radiuses of the third lens 13 on an object-side surface and an image-side surface; R7 and R8 are respectively curvature radiuses of the fourth lens 14 on an object-side surface and an image-side surface; R9 and R10 are respectively the curvature radiuses of the fifth lens 15 on the object-side surface and the image-side surface; R11 and R12 are respectively curvature radiuses of the sixth lens 16 on an object-side surface and an image-side surface; R13 and R14 are respectively curvature radiuses of the seventh lens 17 on an object side and an image side; and R15 and R16 are respectively curvature radiuses of the optical filter 30 on an object-side surface and an image-side surface.

d is a thickness of an optical element along the optical axis or a thickness of a gap between optical elements. d0 is a distance from the aperture stop 40 to the object-side surface of the first lens 11 along the optical axis; d1 is a thickness of the first lens 11 along the optical axis; d2 is a distance from the image-side surface of the first lens 11 to the object-side surface of the second lens 12 along the optical axis; d3 is a thickness of the second lens 12 along the optical axis; d4 is a distance from the image-side surface of the second lens 12 to the object-side surface of the third lens 13 along the optical axis; d5 is a thickness of the third lens 13 along the optical axis; d6 is a distance from the image-side surface of the third lens 13 to the object-side surface of the fourth lens 14 along the optical axis; d7 is a thickness of the fourth lens 14 along the optical axis; d8 is a distance from the image-side surface of the fourth lens 14 to the object-side surface of the fifth lens 15 along the optical axis; d9 is a thickness of the fifth lens 15 along the optical axis; d10 is a distance from the image-side surface of the fifth lens 15 to the object-side surface of the sixth lens 16 along the optical axis; d11 is a thickness of the sixth lens 16 along the optical axis; d12 is a distance from the image-side surface of the sixth lens 16 to the object-side surface of the seventh lens 17 along the optical axis; d13 is a thickness of the seventh lens 17 along the optical axis; d14 is a distance from the image-side surface of the seventh lens 17 to the object-side surface of the optical filter 30 along the optical axis; d15 is a thickness of the filter along the optical axis; and d16 is a distance from the image-side surface of the optical filter 30 to a photosensitive surface of the image sensor 20 along the optical axis.

nd is a refractive index of each optical element irradiated by a d line, where the d line may be green light with a wavelength of 550 nm. nd1 is a d-line refractive index of the first lens 11; nd2 is a d-line refractive index of the second lens 12; nd3 is a d-line refractive index of the third lens 13; nd4 is a d-line refractive index of the fourth lens 14; nd5 is a d-line refractive index of the fifth lens 15; nd6 is a d-line refractive index of the sixth lens 16; and ndg is a d-line refractive index of the optical filter 30.

vd is an Abbe number of an optical element. vd1 is the Abbe number of the first lens 11; vd2 is the Abbe number of the second lens 12; vd3 is an Abbe number of the third lens 13; vd4 is an Abbe number of the fourth lens 14; vd5 is an Abbe number of the fifth lens 15; vd6 is an Abbe number of the sixth lens 16; and vdg is an Abbe number of the optical filter 30.

Table 2 shows aspheric coefficients of lenses in the lens assembly according to Embodiment 1 of this application.

| | | Conic coefficient K | A4 | A6 | A8 | A10 |
|---|---|---|---|---|---|---|
| L1 | R1 | 0 | 1.23E-04 | 3.32E-03 | -7.67E-03 | 1.10E-02 |
| | R2 | 0 | -5.90E-03 | 4.34E-04 | 3.24E-03 | -4.49E-03 |
| L2 | R3 | 0 | -5.15E-03 | 1.04E-02 | -1.50E-03 | -1.03E-03 |
| | R4 | 0 | -5.98E-04 | 8.92E-03 | 7.22E-03 | -1.84E-02 |
| L3 | R5 | 0 | -4.12E-02 | 1.14E-02 | -5.05E-02 | 9.55E-02 |
| | R6 | 0 | -3.34E-02 | 5.60E-03 | -2.26E-02 | 3.49E-02 |
| L4 | R7 | 0 | -2.66E-02 | 1.21E-02 | -7.68E-03 | 4.85E-03 |
| | R8 | 0 | -6.46E-02 | 1.55E-02 | -1.79E-02 | 3.69E-02 |
| L5 | R9 | 0 | -4.55E-02 | -3.32E-03 | -2.65E-03 | 7.85E-03 |
| | R10 | 0 | 4.21E-03 | -5.85E-03 | -4.32E-03 | 4.44E-03 |
| L6 | R11 | 0 | -2.41E-02 | 1.83E-02 | -1.58E-02 | 6.32E-03 |
| | R12 | 0 | -2.37E-02 | 2.52E-02 | -1.94E-02 | 7.35E-03 |
| L7 | R13 | 0 | -2.64E-02 | -2.06E-03 | 5.95E-03 | -2.33E-03 |
| | R14 | -1 | -1.61E-02 | -1.17E-02 | 7.81E-03 | -2.30E-03 |

(continued)

|  |  | A12 | A14 | A16 | A18 | A20 |
|---|---|---|---|---|---|---|
| L1 | R1 | -9.33E-03 | 4.86E-03 | -1.52E-03 | 2.62E-04 | -1.90E-05 |
|  | R2 | 3.72E-03 | -1.89E-03 | 5.79E-04 | -9.60E-05 | 6.00E-06 |
| L2 | R3 | 1.87E-03 | -1.44E-03 | 6.40E-04 | -1.49E-04 | 1.40E-05 |
|  | R4 | 2.21E-02 | -1.59E-02 | 6.90E-03 | -1.65E-03 | 1.68E-04 |
| L3 | R5 | -1.23E-01 | 1.04E-01 | -5.81E-02 | 2.05E-02 | -4.13E-03 |
|  | R6 | -3.83E-02 | 2.85E-02 | -1.41E-02 | 4.48E-03 | -8.16E-04 |
| L4 | R7 | -3.00E-06 | -1.44E-03 | 7.15E-04 | -1.46E-04 | 1.10E-05 |
|  | R8 | -4.09E-02 | 2.86E-02 | -1.29E-02 | 3.67E-03 | -6.43E-04 |
| L5 | R9 | -5.21E-03 | 2.06E-03 | -5.48E-04 | 9.30E-05 | -9.00E-06 |
|  | R10 | -1.81E-03 | 4.98E-04 | -1.19E-04 | 2.60E-05 | -4.00E-06 |
| L6 | R11 | -1.71E-03 | 3.62E-04 | -6.10E-05 | 8.00E-06 | -1.00E-06 |
|  | R12 | -1.72E-03 | 2.74E-04 | -3.10E-05 | 3.00E-06 | -1.51E-07 |
| L7 | R13 | 5.04E-04 | -7.20E-05 | 7.00E-06 | -1.00E-06 | 2.91E-08 |
|  | R14 | 4.18E-04 | -5.20E-05 | 5.00E-06 | -2.90E-07 | 1.34E-08 |
|  |  | A22 | A24 | A26 | A28 | A30 |
| L1 | R1 | 0.00E+00 | 0.00E+00 | 0.00E+00 | 0.00E+00 | 0.00E+00 |
|  | R2 | 0.00E+00 | 0.00E+00 | 0.00E+00 | 0.00E+00 | 0.00E+00 |
| L2 | R3 | 0.00E+00 | 0.00E+00 | 0.00E+00 | 0.00E+00 | 0.00E+00 |
|  | R4 | 0.00E+00 | 0.00E+00 | 0.00E+00 | 0.00E+00 | 0.00E+00 |
| L3 | R5 | 3.59E-04 | 0.00E+00 | 0.00E+00 | 0.00E+00 | 0.00E+00 |
|  | R6 | 6.40E-05 | 3.86E-09 | 0.00E+00 | 0.00E+00 | 0.00E+00 |
| L4 | R7 | 0.00E+00 | 0.00E+00 | 0.00E+00 | 0.00E+00 | 0.00E+00 |
|  | R8 | 6.30E-05 | -3.00E-06 | 0.00E+00 | 0.00E+00 | 0.00E+00 |
| L5 | R9 | 3.45E-07 | 0.00E+00 | 0.00E+00 | 0.00E+00 | 0.00E+00 |
|  | R10 | 4.29E-07 | -1.90E-08 | 2.06E-10 | -5.17E-12 | 0.00E+00 |
| L6 | R11 | 5.39E-08 | -2.73E-09 | 9.26E-11 | -1.89E-12 | 1.75E-14 |
|  | R12 | 6.45E-09 | -1.94E-10 | 3.90E-12 | -4.73E-14 | 2.63E-16 |
| L7 | R13 | -1.13E-09 | 3.11E-11 | -5.71E-13 | 6.29E-15 | -3.14E-17 |
|  | R14 | -4.43E-10 | 1.02E-11 | -1.55E-13 | 1.39E-15 | -5.49E-18 |

It can be learned from Table 2 that the lenses in the lens assembly 10 are all aspherical lenses, that is, the lens assembly 10 includes 14 aspheric surfaces. An aspheric surface type z of each lens in the lens assembly 10 may be calculated according to the following aspheric formula:

$$z = \frac{\frac{1}{R}r^2}{1+\sqrt{1-(K+1)1/R^2 r^2}} + \sum_i Air^i,$$

where

z is a vector height of an aspheric surface, r is a radial coordinate of the aspheric surface, R is a curvature radius of an aspheric vertex, K is a conic constant, Ai is an aspheric coefficient, and i is 4, 6, 8, ..., or 30. The lenses may be simulated according to obtained aspheric surface types and the like, so that the camera module 101 shown in FIG. 4 is finally obtained.

For optical parameters of the lens assembly 10 that includes the foregoing lenses, refer to Table 3.

Table 3 shows the optical parameters of the lens assembly according to Embodiment 1 of this application.

| Focal length EFL | 6.67 mm |
|---|---|
| f-number f-number | 1.88 |
| Half image height IMH | 6.47 mm |
| Half field of view | 43.29° |
| Design wavelength | 650 nm, 610 nm, 555 nm, 510 nm, and 470 nm |

It can be learned from Table 3 that the lens assembly 10 according to Embodiment 1 of this application is a wide-angle lens featuring both a wide aperture and a large target surface.

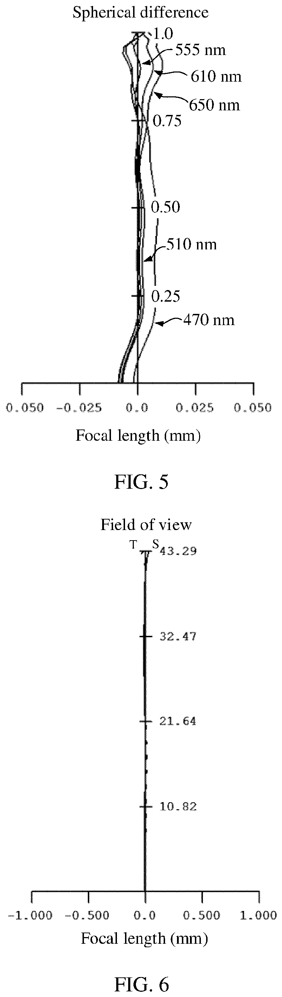

FIG. 5 is a curve diagram of an axial chromatic aberration of a lens assembly according to Embodiment 1 of this application. The axial chromatic aberration shown in FIG. 5 is an axial chromatic aberration obtained after light with wavelengths of 650 nm, 610 nm, 555 nm, 510 nm, and 470 nm passes through the lens assembly 10. A horizontal coordinate represents a size of a spherical difference, and a vertical coordinate represents a normalized aperture. It can be learned from FIG. 5 that the axial chromatic aberration obtained after the light passes through the lens assembly 10 is relatively small.

FIG. 6 is a diagram of astigmatism and field curvature of a lens assembly according to Embodiment 1 of this application. FIG. 6 shows a diagram of astigmatism and field curvature obtained after light with a wavelength of 555 nm passes through the lens assembly 10. S is field curvature in a sagittal direction, T is field curvature in a meridional direction, a horizontal coordinate represents a magnitude of the field curvature, a horizontal distance between T and S represents a magnitude of astigmatism, and a vertical coordinate represents a field of view. It can be learned from FIG. 6 that the lens assembly 10 has relatively small field curvature in both a sagittal direction and a meridional direction, and has relatively high imaging quality.

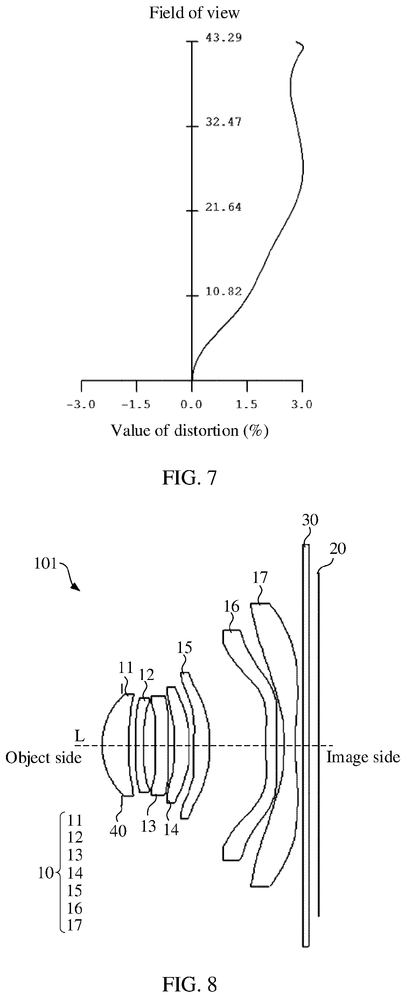

FIG. 7 is a distortion curve diagram of a lens assembly according to Embodiment 1 of this application. FIG. 7 shows a distortion curve obtained after light with a wavelength of 555 nm passes through the lens assembly 10. A horizontal coordinate is a magnitude of distortion, and a vertical coordinate is a field of view. It can be learned from FIG. 7 that imaging through the lens assembly 10 has a relatively small amount of distortion, and a difference between an imaging shape and an ideal shape is relatively small. This meets a deformation difference requirement, and ensures high imaging quality.

Embodiment 2

FIG. 8 is a simulation diagram of a camera module in an operating state according to Embodiment 2 of this application.

In this embodiment, refer to FIG. 8. A quantity N of lenses in a lens assembly 10 may be 7, and a first lens 11, a second lens 12, a third lens 13, a fourth lens 14, a fifth lens 15, a sixth lens 16, and a seventh lens 17 may be sequentially arranged from an object side to an image side along an optical axis.

There is a maximum gap between the fifth lens 15 and the sixth lens 16.

A half image height IMH of the lens assembly 10 is 6.50 mm, a total track length TTL of the lens assembly 10 is 8.21 mm, and the maximum gap Dgap is 2.11 mm. The half image height IMH of the lens assembly 10, the total track length TTL of the lens assembly 10, and the maximum gap Dgap satisfy: $(TTL-Dgap) * TTL/IMH^2 = 1.19$, and $(TTL-Dgap)/(2 * IMH) = 0.47$.

When the camera module 101 is in a non-operating state, the maximum gap is compressed, and the total track length of the lens assembly 10 is: TTL-Dgap=6.10 mm.

The first lens 11 has a positive focal power, and a focal length f1 of the first lens 11 is 7.09 mm. A focal length EFL of the lens assembly 10 is 6.69 mm. The focal length f1 of the first lens 11 and the focal length EFL of the lens assembly 10 satisfy: f1/EFL=1.06.

The second lens 12 has a negative focal power, and a focal length f2 of the second lens 12 is -23.86 mm.

The fourth lens 14 has a negative focal power, and a focal length f4 of the fourth lens 14 is -74.55 mm.

The fifth lens 15 has a positive focal power, and a focal length f5 of the fifth lens 15 is 7.61 mm.

A focal length f6 of the sixth lens 16 is -270.93 mm. The focal length f6 of the sixth lens 16 and the focal length EFL of the lens assembly 10 satisfy: EFL/f6=-0.02.

An f-number F# of the lens assembly 10 is 1.71.

A half field of view HFOV of the lens assembly 10 is 43.29°.

The total track length TTL of the lens assembly 10 and the focal length EFL of the lens assembly 10 satisfy:

# EP 4 603 887 A1

EFL/TTL=0.81.

An Abbe number vd1 of the first lens 11 is 81.56, and an Abbe number vd2 of the second lens 12 is 21.88. The Abbe number vd1 of the first lens 11 and the Abbe number vd2 of the second lens 12 satisfy: vd1-vd2=59.68.

A curvature radius R9 of an object-side surface of the fifth lens 15 is 16.82 mm, and a curvature radius R10 of an image-side surface of the fifth lens 15 is -5.45 mm. The curvature radius R9 of the object-side surface of the fifth lens 15 and the curvature radius R10 of the image-side surface of the fifth lens 15 satisfy: R10/R9=-0.32.

Table 4 shows optical parameters of optical elements in the camera module according to Embodiment 2 of this application.

| | | R | | d | | nd | | vd | |
|---|---|---|---|---|---|---|---|---|---|
| S1 | R0 | ∞ | d0 | -0.77 | | | | | |
| L1 | R1 | 2.67 | d1 | 1.03 | nd1 | 1.50 | vd1 | 81.56 |
| | R2 | 9.58 | d2 | 0.23 | | | | |
| L2 | R3 | 839.41 | d3 | 0.28 | nd2 | 1.64 | vd2 | 21.88 |
| | R4 | 15.07 | d4 | 0.44 | | | | |
| L3 | R5 | 12.09 | d5 | 0.50 | nd3 | 1.69 | vd3 | 18.10 |
| | R6 | 9.61 | d6 | 0.28 | | | | |
| L4 | R7 | -7.24 | d7 | 0.55 | nd4 | 1.61 | vd4 | 26.57 |
| | R8 | -8.85 | d8 | 0.15 | | | | |
| L5 | R9 | 16.82 | d9 | 0.60 | nd5 | 1.55 | vd5 | 55.92 |
| | R10 | -5.45 | d10 | 2.11 | | | | |
| L6 | R11 | 16.63 | d11 | 0.40 | nd6 | 1.68 | vd6 | 18.54 |
| | R12 | 15.11 | d12 | 0.25 | | | | |
| L7 | R13 | -18.03 | d13 | 0.40 | nd7 | 1.57 | vd7 | 41.67 |
| | R14 | 4.32 | d14 | 0.37 | | | | |
| IR | R15 | ∞ | d15 | 0.21 | ndg | 1.52 | vdg | 64.17 |
| | R16 | ∞ | d16 | 0.42 | | | | |

L1 is the first lens 11, L2 is the second lens 12, L3 is the third lens 13, L4 is the fourth lens 14, L5 is the fifth lens 15, L6 is the sixth lens 16, L7 is the seventh lens 17, S1 is an aperture stop 40, and IR is an optical filter 30.

R is a curvature radius of an optical element (for example, a lens or the optical filter) at a corresponding position on the optical axis. For specific meanings of R0, R1, ..., and R16, refer to Embodiment 1. Details are not described again in this embodiment of this application.

d is a thickness of an optical element along the optical axis or a thickness of a gap between optical elements. For specific meanings of d0, d1, ..., and d16, refer to Embodiment 1. Details are not described again in this embodiment of this application.

nd is a refractive index of each optical element irradiated by a d line. For specific meanings of nd1, nd2, ..., and ndg, refer to Embodiment 1. Details are not described again in this embodiment of this application.

vd is an Abbe number of an optical element. For specific meanings of vd1, vd2, ..., and vdg, refer to Embodiment 1. Details are not described again in this embodiment of this application.

Table 5 shows aspheric coefficients of lenses in the lens assembly according to Embodiment 2 of this application.

| | | Conic coefficient K | A4 | A6 | A8 | A10 |
|---|---|---|---|---|---|---|
| L1 | R1 | 0 | -8.95E-04 | 5.31E-03 | -9.14E-03 | 9.98E-03 |
| | R2 | 0 | -4.82E-03 | -2.22E-04 | 3.38E-03 | -3.73E-03 |
| L2 | R3 | 0 | -5.50E-03 | 1.11E-02 | -5.89E-03 | 3.87E-03 |
| | R4 | 0 | -2.63E-03 | 6.53E-03 | 8.05E-03 | -1.71E-02 |

(continued)

| | | Conic coefficient K | A4 | A6 | A8 | A10 |
|---|---|---|---|---|---|---|
| L3 | R5 | 0 | -3.34E-02 | 1.80E-02 | -5.37E-02 | 8.76E-02 |
| | R6 | 0 | -2.41E-02 | 6.57E-03 | -1.59E-02 | 1.84E-02 |
| L4 | R7 | 0 | -1.78E-02 | 8.53E-03 | -9.28E-03 | 7.45E-03 |
| | R8 | 0 | -4.85E-02 | 1.01E-02 | -1.36E-02 | 2.41E-02 |
| L5 | R9 | 0 | -3.44E-02 | -4.06E-03 | 3.56E-04 | 2.93E-03 |
| | R10 | 0 | 4.07E-03 | -5.88E-03 | -2.85E-04 | 6.80E-05 |
| L6 | R11 | 0 | -3.04E-02 | 2.21E-02 | -2.00E-02 | 9.86E-03 |
| | R12 | 0 | -1.79E-02 | 1.88E-02 | -1.40E-02 | 5.11E-03 |
| L7 | R13 | 0 | -1.65E-02 | -4.19E-04 | 2.14E-03 | -6.85E-04 |
| | R14 | -1 | -1.90E-02 | -4.85E-03 | 3.20E-03 | -8.06E-04 |
| | | A12 | A14 | A16 | A18 | A20 |
| L1 | R1 | -6.72E-03 | 2.83E-03 | -7.20E-04 | -7.20E-04 | -6.00E-06 |
| | R2 | 2.40E-03 | -9.63E-04 | 2.35E-04 | 2.35E-04 | 2.00E-06 |
| L2 | R3 | -2.16E-03 | 8.19E-04 | -1.78E-04 | -1.78E-04 | -1.00E-06 |
| | R4 | 1.65E-02 | -9.38E-03 | 3.21E-03 | 3.21E-03 | 4.80E-05 |
| L3 | R5 | -9.34E-02 | 6.51E-02 | -2.95E-02 | -2.95E-02 | -1.35E-03 |
| | R6 | -1.50E-02 | 8.32E-03 | -3.12E-03 | -3.12E-03 | -1.09E-04 |
| L4 | R7 | -3.33E-03 | 8.93E-04 | -1.40E-04 | -1.40E-04 | -4.61E-07 |
| | R8 | -2.24E-02 | 1.30E-02 | -4.82E-03 | -4.82E-03 | -1.66E-04 |
| L5 | R9 | -1.94E-03 | 6.91E-04 | -1.58E-04 | -1.58E-04 | -2.00E-06 |
| | R10 | 5.64E-04 | -3.50E-04 | 9.90E-05 | 9.90E-05 | 1.00E-06 |
| L6 | R11 | -3.46E-03 | 9.06E-04 | -1.74E-04 | -1.74E-04 | -2.00E-06 |
| | R12 | -1.17E-03 | 1.86E-04 | -2.10E-05 | -2.10E-05 | -1.08E-07 |
| L7 | R13 | 1.16E-04 | -1.30E-05 | 1.00E-06 | 1.00E-06 | 2.36E-09 |
| | R14 | 1.25E-04 | -1.30E-05 | 1.00E-06 | 1.00E-06 | 2.50E-09 |
| | | A22 | A24 | A26 | A28 | A30 |
| L1 | R1 | 0.00E+00 | 0.00E+00 | 0.00E+00 | 0.00E+00 | 0.00E+00 |
| | R2 | 0.00E+00 | 0.00E+00 | 0.00E+00 | 0.00E+00 | 0.00E+00 |
| L2 | R3 | 0.00E+00 | 0.00E+00 | 0.00E+00 | 0.00E+00 | 0.00E+00 |
| | R4 | 0.00E+00 | 0.00E+00 | 0.00E+00 | 0.00E+00 | 0.00E+00 |
| L3 | R5 | 9.40E-05 | 0.00E+00 | 0.00E+00 | 0.00E+00 | 0.00E+00 |
| | R6 | 7.00E-06 | 3.18E-10 | 0.00E+00 | 0.00E+00 | 0.00E+00 |
| L4 | R7 | 0.00E+00 | 0.00E+00 | 0.00E+00 | 0.00E+00 | 0.00E+00 |
| | R8 | 1.40E-05 | -4.94E-07 | 0.00E+00 | 0.00E+00 | 0.00E+00 |
| L5 | R9 | 6.02E-08 | 0.00E+00 | 0.00E+00 | 0.00E+00 | 0.00E+00 |
| | R10 | -4.25E-08 | -8.08E-11 | 2.63E-11 | -5.61E-13 | 0.00E+00 |
| L6 | R11 | 1.72E-07 | -8.43E-09 | 2.73E-10 | -5.23E-12 | 4.50E-14 |
| | R12 | 4.75E-09 | -1.47E-10 | 3.04E-12 | -3.75E-14 | 2.09E-16 |

(continued)

|  |  | A22 | A24 | A26 | A28 | A30 |
|---|---|---|---|---|---|---|
| L7 | R13 | -7.31E-11 | 1.63E-12 | -2.46E-14 | 2.26E-16 | -9.48E-19 |
|  | R14 | -7.60E-11 | 1.63E-12 | -2.35E-14 | 2.03E-16 | -7.97E-19 |

It can be learned from Table 5 that the lenses in the lens assembly 10 are all aspherical lenses, that is, the lens assembly 10 includes 14 aspheric surfaces. An aspheric surface type z of each lens in the lens assembly 10 may be calculated according to the following aspheric formula:

$$z = \frac{\frac{1}{R}r^2}{1+\sqrt{1-(K+1)1/R^2r^2}} + \sum_i A_i r^i,$$

where
z is a vector height of an aspheric surface, r is a radial coordinate of the aspheric surface, R is a curvature radius of an aspheric vertex, K is a conic constant, $A_i$ is an aspheric coefficient, and i is 4, 6, 8, ..., or 30. The lenses may be simulated according to obtained aspheric surface types and the like, so that the camera module 101 shown in FIG. 8 is finally obtained.

For optical parameters of the lens assembly that includes the foregoing lenses, refer to Table 6.

Table 6 shows the optical parameters of the lens assembly according to Embodiment 2 of this application.

| Focal length EFL | 6.69 mm |
|---|---|
| f-number f-number | 1.71 |
| Half image height IMH | 6.50 mm |
| Half field of view | 43.29° |
| Design wavelength | 650 nm, 610 nm, 555 nm, 510 nm, and 470 nm |

It can be learned from Table 6 that the lens assembly 10 according to Embodiment 2 of this application is a wide-angle lens featuring both a wide aperture and a large target surface.

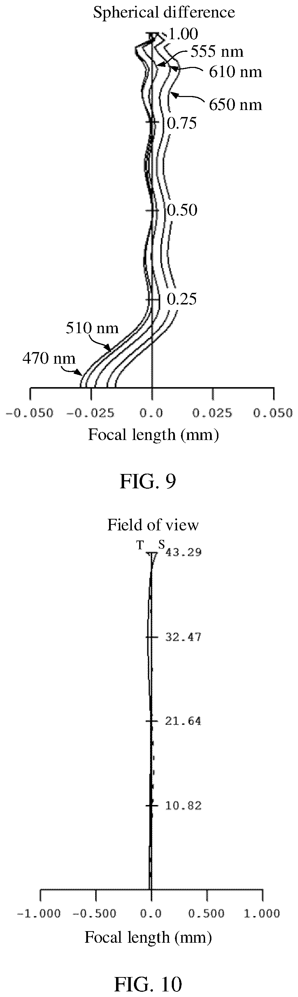

FIG. 9 is a curve diagram of an axial chromatic aberration of a lens assembly according to Embodiment 2 of this application. The axial chromatic aberration shown in FIG. 9 is an axial chromatic aberration obtained after light with wavelengths of 650 nm, 610 nm, 555 nm, 510 nm, and 470 nm passes through the lens assembly 10. It can be learned from FIG. 9 that the axial chromatic aberration obtained after the light passes through the lens assembly 10 is relatively small.

FIG. 10 is a diagram of astigmatism and field curvature of a lens assembly according to Embodiment 2 of this application. FIG. 10 shows a diagram of astigmatism and field curvature obtained after light with a wavelength of 555 nm passes through the lens assembly 10. It can be learned from FIG. 10 that the lens assembly 10 has relatively small field curvature in both a sagittal direction and a meridional direction, and has relatively high imaging quality.

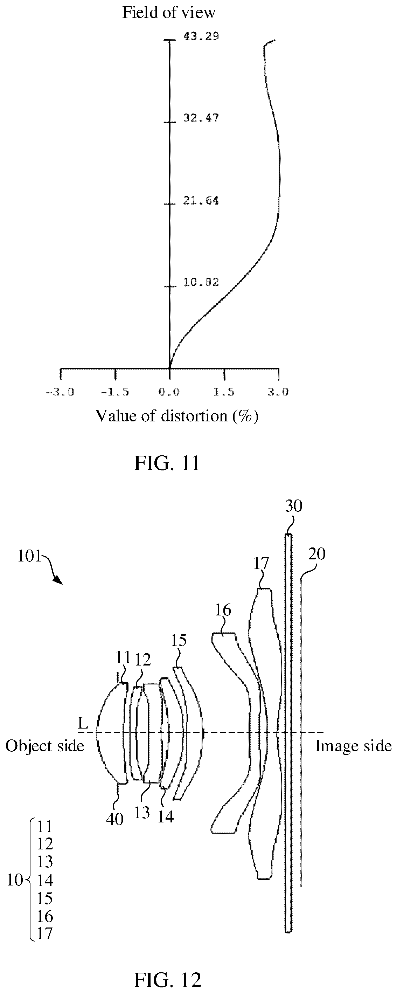

FIG. 11 is a distortion curve diagram of a lens assembly according to Embodiment 2 of this application. FIG. 11 shows a distortion curve obtained after light with a wavelength of 555 nm passes through the lens assembly 10. It can be learned from FIG. 11 that imaging through the lens assembly 10 has a relatively small amount of distortion, and a difference between an imaging shape and an ideal shape is relatively small. This meets a deformation difference requirement, and ensures high imaging quality.

Embodiment 3

FIG. 12 is a simulation diagram of a camera module in an operating state according to Embodiment 3 of this application.

In this embodiment, refer to FIG. 12. A quantity N of lenses in a lens assembly 10 may be 7, and a first lens 11, a second lens 12, a third lens 13, a fourth lens 14, a fifth lens 15, a sixth lens 16, and a seventh lens 17 may be sequentially arranged from an object side to an image side along an optical axis.

There is a maximum gap between the fifth lens 15 and the sixth lens 16.

A half image height IMH of the lens assembly 10 is 6.45 mm, a total track length TTL of the lens assembly 10 is 8.51 mm, and the maximum gap Dgap is 1.96 mm. The half image height IMH of the lens assembly 10, the total track length TTL of the lens assembly 10, and the maximum gap Dgap satisfy: (TTL-Dgap) * TTL/IMH² =1.34, and (TTL-Dgap)/(2 * IMH)=0.51.

When the camera module 101 is in a non-operating state, the maximum gap is compressed, and the total track length of the lens assembly 10 is: TTL-Dgap=6.55 mm.

The first lens 11 has a positive focal power, and a focal length f1 of the first lens 11 is 7.40 mm. A focal length EFL of the lens assembly 10 is 6.71 mm. The focal length f1 of the first lens 11 and the focal length EFL of the lens assembly 10 satisfy: f1/EFL=1.10.

The second lens 12 has a negative focal power, and a focal length f2 of the second lens 12 is -24.89 mm.

The fourth lens 14 has a negative focal power, and a focal length f4 of the fourth lens 14 is -82.82 mm.

The fifth lens 15 has a positive focal power, and a focal length f5 of the fifth lens 15 is 7.38 mm.

A focal length f6 of the sixth lens 16 is -82.69 mm. The focal length f6 of the sixth lens 16 and the focal length EFL of the lens assembly 10 satisfy: EFL/f6=-0.08.

An f-number F# of the lens assembly 10 is 1.59.

A half field of view HFOV of the lens assembly 10 is 43.29°.

The total track length TTL of the lens assembly 10 and the focal length EFL of the lens assembly 10 satisfy:

$$EFL/TTL=0.79.$$

An Abbe number vd1 of the first lens 11 is 81.56, and an Abbe number vd2 of the second lens 12 is 23.48. The Abbe number vd1 of the first lens 11 and the Abbe number vd2 of the second lens 12 satisfy: vd1-vd2=58.07.

A curvature radius R9 of an object-side surface of the fifth lens 15 is 19.02 mm, and a curvature radius R10 of an image-side surface of the fifth lens 15 is -5.04 mm. The curvature radius R9 of the object-side surface of the fifth lens 15 and the curvature radius R10 of the image-side surface of the fifth lens 15 satisfy: R10/R9=-0.27.

Table 7 shows optical parameters of optical elements in the camera module according to Embodiment 3 of this application.

| | | R | | d | | nd | | vd | |
|---|---|---|---|---|---|---|---|---|---|
| S1 | R0 | ∞ | d0 | -0.83 | | | | | |
| L1 | R1 | 2.89 | d1 | 1.10 | nd1 | 1.50 | vd1 | 81.56 |
| | R2 | 11.66 | d2 | 0.27 | | | | |
| L2 | R3 | 60.50 | d3 | 0.27 | nd2 | 1.63 | vd2 | 23.48 |
| | R4 | 12.43 | d4 | 0.50 | | | | |
| L3 | R5 | 12.43 | d5 | 0.55 | nd3 | 1.69 | vd3 | 18.10 |
| | R6 | 10.07 | d6 | 0.30 | | | | |
| L4 | R7 | -7.44 | d7 | 0.61 | nd4 | 1.59 | vd4 | 32.23 |
| | R8 | -9.05 | d8 | 0.15 | | | | |
| L5 | R9 | 19.02 | d9 | 0.66 | nd5 | 1.55 | vd5 | 55.92 |
| | R10 | -5.04 | d10 | 1.96 | | | | |
| L6 | R11 | 14.15 | d11 | 0.40 | nd6 | 1.68 | vd6 | 19.24 |
| | R12 | 11.17 | d12 | 0.34 | | | | |
| L7 | R13 | -19.89 | d13 | 0.42 | nd7 | 1.56 | vd7 | 45.71 |
| | R14 | 4.76 | d14 | 0.36 | | | | |

(continued)

|  | R | | d | | nd | | vd | |
|---|---|---|---|---|---|---|---|---|
| IR | R15 | ∞ | d15 | 0.21 | ndg | 1.52 | vdg | 64.17 |
|  | R16 | ∞ | d16 | 0.42 | | | | |

L1 is the first lens 11, L2 is the second lens 12, L3 is the third lens 13, L4 is the fourth lens 14, L5 is the fifth lens 15, L6 is the sixth lens 16, L7 is the seventh lens 17, S1 is an aperture stop 40, and IR is an optical filter 30.

R is a curvature radius of an optical element (for example, a lens or the optical filter) at a corresponding position on the optical axis. For specific meanings of R0, R1, ..., and R16, refer to Embodiment 1. Details are not described again in this embodiment of this application.

d is a thickness of an optical element along the optical axis or a thickness of a gap between optical elements. For specific meanings of d0, d1, ..., and d16, refer to Embodiment 1. Details are not described again in this embodiment of this application.

nd is a refractive index of each optical element irradiated by a d line. For specific meanings of nd1, nd2, ..., and ndg, refer to Embodiment 1. Details are not described again in this embodiment of this application.

vd is an Abbe number of an optical element. For specific meanings of vd1, vd2, ..., and vdg, refer to Embodiment 1. Details are not described again in this embodiment of this application.

Table 8 shows aspheric coefficients of lenses in the lens assembly according to Embodiment 3 of this application.

|  |  | Conic coefficient K | A4 | A6 | A8 | A10 |
|---|---|---|---|---|---|---|
| L1 | R1 | 0 | -9.33E-04 | 3.80E-03 | -5.65E-03 | 5.12E-03 |
|  | R2 | 0 | -4.02E-03 | 1.02E-03 | 3.32E-04 | -2.46E-04 |
| L2 | R3 | 0 | -6.11E-03 | 8.65E-03 | -2.52E-03 | 1.81E-04 |
|  | R4 | 0 | -3.68E-03 | 4.19E-03 | 7.60E-03 | -1.24E-02 |
| L3 | R5 | 0 | -2.72E-02 | 1.54E-02 | -3.89E-02 | 5.31E-02 |
|  | R6 | 0 | -1.69E-02 | 1.63E-03 | -4.82E-03 | 4.27E-03 |
| L4 | R7 | 0 | -1.18E-02 | 2.26E-03 | -9.75E-04 | -5.12E-04 |
|  | R8 | 0 | -3.31E-02 | -7.08E-03 | 4.89E-03 | 4.65E-03 |
| L5 | R9 | 0 | -1.91E-02 | -1.47E-02 | 1.08E-02 | -5.60E-03 |
|  | R10 | 0 | 6.40E-03 | -3.81E-03 | -2.24E-03 | 2.11E-03 |
| L6 | R11 | 0 | -2.13E-02 | 1.70E-02 | -1.72E-02 | 9.34E-03 |
|  | R12 | 0 | -9.25E-03 | 7.41E-03 | -6.19E-03 | 2.14E-03 |
| L7 | R13 | 0 | -1.43E-02 | -4.14E-03 | 3.52E-03 | -9.38E-04 |
|  | R14 | -1 | -1.20E-02 | -6.40E-03 | 3.06E-03 | -6.65E-04 |
|  |  | A12 | A14 | A16 | A18 | A20 |
| L1 | R1 | -2.83E-03 | 9.75E-04 | -2.04E-04 | 2.40E-05 | -1.00E-06 |
|  | R2 | 7.00E-06 | 4.60E-05 | -2.00E-05 | 4.00E-06 | -2.55E-07 |
| L2 | R3 | 3.53E-04 | -2.30E-04 | 7.40E-05 | -1.30E-05 | 1.00E-06 |
|  | R4 | 9.73E-03 | -4.59E-03 | 1.31E-03 | -2.07E-04 | 1.40E-05 |
| L3 | R5 | -4.71E-02 | 2.73E-02 | -1.03E-02 | 2.45E-03 | -3.32E-04 |
|  | R6 | -2.84E-03 | 1.37E-03 | -4.67E-04 | 1.07E-04 | -1.40E-05 |
| L4 | R7 | 1.20E-03 | -6.30E-04 | 1.57E-04 | -2.00E-05 | 1.00E-06 |
|  | R8 | -7.04E-03 | 4.38E-03 | -1.57E-03 | 3.39E-04 | -4.40E-05 |
| L5 | R9 | 2.50E-03 | -7.86E-04 | 1.58E-04 | -2.00E-05 | 1.00E-06 |
|  | R10 | -1.02E-03 | 3.80E-04 | -1.02E-04 | 1.80E-05 | -2.00E-06 |

(continued)

| | | A12 | A14 | A16 | A18 | A20 |
|---|---|---|---|---|---|---|
| L6 | R11 | -3.50E-03 | 9.38E-04 | -1.79E-04 | 2.40E-05 | -2.00E-06 |
| | R12 | -4.53E-04 | 6.70E-05 | -7.00E-06 | 1.00E-06 | -3.77E-08 |
| L7 | R13 | 1.43E-04 | -1.40E-05 | 1.00E-06 | -5.04E-08 | 1.86E-09 |
| | R14 | 9.20E-05 | -9.00E-06 | 1.00E-06 | -3.22E-08 | 1.23E-09 |
| | | A22 | A24 | A26 | A28 | A30 |
| L1 | R1 | 0.00E+00 | 0.00E+00 | 0.00E+00 | 0.00E+00 | 0.00E+00 |
| | R2 | 0.00E+00 | 0.00E+00 | 0.00E+00 | 0.00E+00 | 0.00E+00 |
| L2 | R3 | 0.00E+00 | 0.00E+00 | 0.00E+00 | 0.00E+00 | 0.00E+00 |
| | R4 | 0.00E+00 | 0.00E+00 | 0.00E+00 | 0.00E+00 | 0.00E+00 |
| L3 | R5 | 1.90E-05 | 0.00E+00 | 0.00E+00 | 0.00E+00 | 0.00E+00 |
| | R6 | 1.00E-06 | 5.06E-11 | 0.00E+00 | 0.00E+00 | 0.00E+00 |
| L4 | R7 | 0.00E+00 | 0.00E+00 | 0.00E+00 | 0.00E+00 | 0.00E+00 |
| | R8 | 3.00E-06 | -1.00E-07 | 0.00E+00 | 0.00E+00 | 0.00E+00 |
| L5 | R9 | -4.03E-08 | 0.00E+00 | 0.00E+00 | 0.00E+00 | 0.00E+00 |
| | R10 | 1.24E-07 | -3.26E-09 | 4.02E-12 | -7.37E-14 | 0.00E+00 |
| L6 | R11 | 1.62E-07 | -7.65E-09 | 2.37E-10 | -4.35E-12 | 3.57E-14 |
| | R12 | 1.71E-09 | -5.48E-11 | 1.16E-12 | -1.45E-14 | 8.09E-17 |
| L7 | R13 | -4.95E-11 | 9.35E-13 | -1.19E-14 | 9.11E-17 | -3.19E-19 |
| | R14 | -3.43E-11 | 6.74E-13 | -8.88E-15 | 7.02E-17 | -2.51E-19 |

It can be learned from Table 8 that the lenses in the lens assembly 10 are all aspherical lenses, that is, the lens assembly 10 includes 14 aspheric surfaces. An aspheric surface type z of each lens in the lens assembly 10 may be calculated according to the following aspheric formula:

$$z = \frac{\frac{1}{R}r^2}{1+\sqrt{1-(K+1)1/R^2r^2}} + \sum_i Air^i,$$

where

z is a vector height of an aspheric surface, r is a radial coordinate of the aspheric surface, R is a curvature radius of an aspheric vertex, K is a conic constant, Ai is an aspheric coefficient, and i is 4, 6, 8, ..., or 30. The lenses may be simulated according to obtained aspheric surface types and the like, so that the camera module 101 shown in FIG. 12 is finally obtained.

For optical parameters of the lens assembly that includes the foregoing lenses, refer to Table 9.

Table 9 shows the optical parameters of the lens assembly according to Embodiment 3 of this application.

| | |
|---|---|
| Focal length EFL | 6.71 mm |
| f-number f-number | 1.59 |
| Half image height IMH | 6.45 mm |
| Half field of view | 43.29° |
| Design wavelength | 650 nm, 610 nm, 555 nm, 510 nm, and 470 nm |

It can be learned from Table 9 that the lens assembly 10 according to Embodiment 3 of this application is a wide-angle lens featuring both a wide aperture and a large target surface.

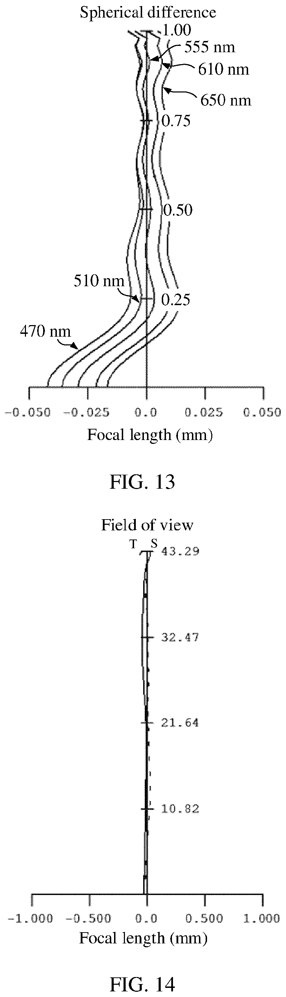

FIG. 13 is a curve diagram of an axial chromatic aberration of a lens assembly according to Embodiment 3 of this application. The axial chromatic aberration shown in FIG. 13 is an axial chromatic aberration obtained after light with wavelengths of 650 nm, 610 nm, 555 nm, 510 nm, and 470 nm passes through the lens assembly 10. It can be learned from FIG. 13 that the axial chromatic aberration obtained after the light passes through the lens assembly 10 is relatively small.

FIG. 14 is a diagram of astigmatism and field curvature of a lens assembly according to Embodiment 3 of this application. FIG. 14 shows a diagram of astigmatism and field curvature obtained after light with a wavelength of 555 nm passes through the lens assembly 10. It can be learned from FIG. 14 that the lens assembly 10 has relatively small field curvature in both a sagittal direction and a meridional direction, and has relatively high imaging quality.

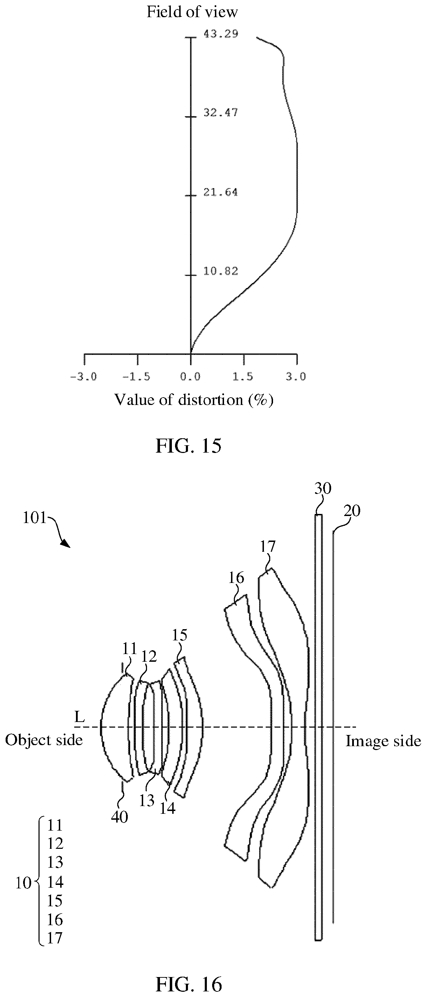

FIG. 15 is a distortion curve diagram of a lens assembly according to Embodiment 3 of this application. FIG. 15 shows a distortion curve obtained after light with a wavelength of 555 nm passes through the lens assembly 10. It can be learned from FIG. 15 that imaging through the lens assembly 10 has a relatively small amount of distortion, and a difference between an imaging shape and an ideal shape is relatively small. This meets a deformation difference requirement, and ensures high imaging quality.

Embodiment 4

FIG. 16 is a simulation diagram of a camera module in an operating state according to Embodiment 4 of this application.

In this embodiment, refer to FIG. 16. A quantity N of lenses in a lens assembly 10 may be 7, and a first lens 11, a second lens 12, a third lens 13, a fourth lens 14, a fifth lens 15, a sixth lens 16, and a seventh lens 17 may be sequentially arranged from an object side to an image side along an optical axis.

There is a maximum gap between the fifth lens 15 and the sixth lens 16.

A half image height IMH of the lens assembly 10 is 6.47 mm, a total track length TTL of the lens assembly 10 is 7.51 mm, and the maximum gap Dgap is 2.21 mm. The half image height IMH of the lens assembly 10, the total track length TTL of the lens assembly 10, and the maximum gap Dgap satisfy: (TTL-Dgap) * TTL/IMH$^2$=0.95, and (TTL-Dgap)/(2 * IMH) =0.41.

When the camera module 101 is in a non-operating state, the maximum gap is compressed, and the total track length of the lens assembly 10 is: TTL-Dgap=5.30 mm.

The first lens 11 has a positive focal power, and a focal length f1 of the first lens 11 is 6.86 mm. A focal length EFL of the lens assembly 10 is 6.44 mm. The focal length f1 of the first lens 11 and the focal length EFL of the lens assembly 10 satisfy: f1/EFL=1.06.

The second lens 12 has a negative focal power, and a focal length f2 of the second lens 12 is -35.16 mm.

The fourth lens 14 has a negative focal power, and a focal length f4 of the fourth lens 14 is -15.35 mm.

The fifth lens 15 has a positive focal power, and a focal length f5 of the fifth lens 15 is 6.24 mm.

A focal length f6 of the sixth lens 16 is 4392.16 mm. The focal length f6 of the sixth lens 16 and the focal length EFL of the lens assembly 10 satisfy: EFL/f6=0.001.

An f-number F# of the lens assembly 10 is 1.88.

A half field of view HFOV of the lens assembly 10 is 43.29°.

The total track length TTL of the lens assembly 10 and the focal length EFL of the lens assembly 10 satisfy: EFL/TTL=0.86.

An Abbe number vd1 of the first lens 11 is 81.56, and an Abbe number vd2 of the second lens 12 is 18.12. The Abbe number vd1 of the first lens 11 and the Abbe number vd2 of the second lens 12 satisfy: vd1-vd2=63.44.

A curvature radius R9 of an object-side surface of the fifth lens 15 is 18.55 mm, and a curvature radius R10 of an image-side surface of the fifth lens 15 is -4.37 mm. The curvature radius R9 of the object-side surface of the fifth lens 15 and the curvature radius R10 of the image-side surface of the fifth lens 15 satisfy: R10/R9=-0.24.

Table 10 shows optical parameters of optical elements in the camera module according to Embodiment 4 of this application.

| | | R | | d | | nd | | vd | |
|---|---|---|---|---|---|---|---|---|---|
| S1 | R0 | ∞ | d0 | -0.70 | | | | | |
| L1 | R1 | 2.37 | d1 | 0.88 | nd1 | 1.50 | vd1 | 81.56 |
| | R2 | 6.79 | d2 | 0.21 | | | | |
| L2 | R3 | 15.76 | d3 | 0.25 | nd2 | 1.69 | vd2 | 18.12 |
| | R4 | 9.48 | d4 | 0.37 | | | | |
| L3 | R5 | 8.74 | d5 | 0.25 | nd3 | 1.69 | vd3 | 18.10 |
| | R6 | 7.89 | d6 | 0.24 | | | | |

(continued)

| | | R | | d | | nd | | vd | |
|---|---|---|---|---|---|---|---|---|---|
| L4 | R7 | -6.37 | d7 | 0.43 | nd4 | 1.60 | vd4 | 28.58 |
| | R8 | -20.96 | d8 | 0.15 | | | | |
| L5 | R9 | 18.55 | d9 | 0.51 | nd5 | 1.57 | vd5 | 38.66 |
| | R10 | -4.37 | d10 | 2.21 | | | | |
| L6 | R11 | 26.70 | d11 | 0.40 | nd6 | 1.68 | vd6 | 19.24 |
| | R12 | 26.78 | d12 | 0.27 | | | | |
| L7 | R13 | -8.96 | d13 | 0.43 | nd7 | 1.57 | vd7 | 38.60 |
| | R14 | 5.02 | d14 | 0.33 | | | | |
| IR | R15 | ∞ | d15 | 0.21 | ndg | 1.52 | vdg | 64.17 |
| | R16 | ∞ | d16 | 0.38 | | | | |

L1 is the first lens 11, L2 is the second lens 12, L3 is the third lens 13, L4 is the fourth lens 14, L5 is the fifth lens 15, L6 is the sixth lens 16, L7 is the seventh lens 17, S1 is an aperture stop 40, and IR is an optical filter 30.

R is a curvature radius of an optical element (for example, a lens or the optical filter) at a corresponding position on the optical axis. For specific meanings of R0, R1, ..., and R16, refer to Embodiment 1. Details are not described again in this embodiment of this application.

d is a thickness of an optical element along the optical axis or a thickness of a gap between optical elements. For specific meanings of d0, d1, ..., and d16, refer to Embodiment 1. Details are not described again in this embodiment of this application.

nd is a refractive index of each optical element irradiated by a d line. For specific meanings of nd1, nd2, ..., and ndg, refer to Embodiment 1. Details are not described again in this embodiment of this application.

vd is an Abbe number of an optical element. For specific meanings of vd1, vd2, ..., and vdg, refer to Embodiment 1. Details are not described again in this embodiment of this application.

Table 11 shows aspheric coefficients of lenses in the lens assembly according to Embodiment 4 of this application.

| | | Conic coefficient K | A4 | A6 | A8 | A10 |
|---|---|---|---|---|---|---|
| L1 | R1 | 0 | -2.91E-03 | 1.46E-02 | -3.16E-02 | 4.26E-02 |
| | R2 | 0 | -7.62E-03 | -1.76E-03 | 7.38E-03 | -9.37E-03 |
| L2 | R3 | 0 | -8.98E-03 | 1.34E-02 | -9.51E-03 | 1.35E-02 |
| | R4 | 0 | -1.92E-03 | 8.59E-03 | 1.21E-02 | -3.28E-02 |
| L3 | R5 | 0 | -4.49E-02 | 5.44E-02 | -2.22E-01 | 4.71E-01 |
| | R6 | 0 | -3.60E-02 | 2.51E-02 | -7.78E-02 | 1.20E-01 |
| L4 | R7 | 0 | -3.31E-02 | 3.99E-03 | 3.74E-02 | -6.78E-02 |
| | R8 | 0 | -7.31E-02 | -2.34E-03 | 4.91E-02 | -7.69E-02 |
| L5 | R9 | 0 | -4.99E-02 | 6.55E-04 | -6.60E-03 | 9.08E-03 |
| | R10 | 0 | 1.32E-03 | -4.12E-03 | 8.50E-05 | -7.11E-03 |
| L6 | R11 | 0 | -2.88E-02 | 2.05E-02 | -1.81E-02 | 6.77E-03 |
| | R12 | 0 | -2.72E-02 | 3.18E-02 | -2.65E-02 | 1.08E-02 |
| L7 | R13 | 0 | -2.94E-02 | 1.63E-03 | 4.36E-03 | -1.95E-03 |
| | R14 | -1 | -1.83E-02 | -1.39E-02 | 1.01E-02 | -3.20E-03 |
| | | A12 | A14 | A16 | A18 | A20 |
| L1 | R1 | -3.58E-02 | 1.88E-02 | -6.03E-03 | 1.07E-03 | -8.10E-05 |
| | R2 | 7.73E-03 | -3.99E-03 | 1.25E-03 | -2.10E-04 | 1.40E-05 |

(continued)

| | | | A12 | A14 | A16 | A18 | A20 |
|---|---|---|---|---|---|---|---|
| L2 | R3 | | -1.23E-02 | 6.86E-03 | -2.24E-03 | 4.02E-04 | -3.20E-05 |
| | R4 | | 4.48E-02 | -3.58E-02 | 1.68E-02 | -4.28E-03 | 4.55E-04 |
| L3 | RS | | -6.59E-01 | 6.07E-01 | -3.66E-01 | 1.39E-01 | -2.99E-02 |
| | R6 | | -1.30E-01 | 9.59E-02 | -4.74E-02 | 1.51E-02 | -2.76E-03 |
| L4 | R7 | | 6.75E-02 | -3.92E-02 | 1.30E-02 | -2.27E-03 | 1.59E-04 |
| | R8 | | 7.88E-02 | -5.41E-02 | 2.57E-02 | -8.49E-03 | 1.83E-03 |
| L5 | R9 | | -5.73E-03 | 2.99E-03 | -1.14E-03 | 2.59E-04 | -3.10E-05 |
| | R10 | | 1.05E-02 | -7.01E-03 | 2.78E-03 | -6.80E-04 | 1.00E-04 |
| L6 | R11 | | -1.45E-03 | 1.89E-04 | -1.10E-05 | -1.00E-06 | 3.42E-07 |
| | R12 | | -2.74E-03 | 4.73E-04 | -5.80E-05 | 5.00E-06 | -3.28E-07 |
| L7 | R13 | | 4.47E-04 | -6.70E-05 | 7.00E-06 | -1.00E-06 | 2.93E-08 |
| | R14 | | 6.27E-04 | -8.40E-05 | 8.00E-06 | -1.00E-06 | 2.80E-08 |
| | | | A22 | A24 | A26 | A28 | A30 |
| L1 | R1 | | 0.00E+00 | 0.00E+00 | 0.00E+00 | 0.00E+00 | 0.00E+00 |
| | R2 | | 0.00E+00 | 0.00E+00 | 0.00E+00 | 0.00E+00 | 0.00E+00 |
| L2 | R3 | | 0.00E+00 | 0.00E+00 | 0.00E+00 | 0.00E+00 | 0.00E+00 |
| | R4 | | 0.00E+00 | 0.00E+00 | 0.00E+00 | 0.00E+00 | 0.00E+00 |
| L3 | R5 | | 2.80E-03 | 0.00E+00 | 0.00E+00 | 0.00E+00 | 0.00E+00 |
| | R6 | | 2.18E-04 | 5.44E-09 | 0.00E+00 | 0.00E+00 | 0.00E+00 |
| L4 | R7 | | 0.00E+00 | 0.00E+00 | 0.00E+00 | 0.00E+00 | 0.00E+00 |
| | R8 | | -2.28E-04 | 1.20E-05 | 0.00E+00 | 0.00E+00 | 0.00E+00 |
| L5 | R9 | | 1.00E-06 | 0.00E+00 | 0.00E+00 | 0.00E+00 | 0.00E+00 |
| | R10 | | -8.00E-06 | 2.73E-07 | 7.26E-10 | -2.01E-11 | 0.00E+00 |
| L6 | R11 | | -3.78E-08 | 2.46E-09 | -9.73E-11 | 2.18E-12 | -2.12E-14 |
| | R12 | | 1.51E-08 | -4.89E-10 | 1.06E-11 | -1.37E-13 | 8.15E-16 |
| L7 | R13 | | -1.18E-09 | 3.38E-11 | -6.46E-13 | 7.44E-15 | -3.90E-17 |
| | R14 | | -1.02E-09 | 2.62E-11 | -4.48E-13 | 4.58E-15 | -2.12E-17 |

It can be learned from Table 11 that the lenses in the lens assembly 10 are all aspherical lenses, that is, the lens assembly 10 includes 14 aspheric surfaces. An aspheric surface type z of each lens in the lens assembly 10 may be calculated according to the following aspheric formula:

$$z = \frac{\frac{1}{R}r^2}{1+\sqrt{1-(K+1)1/R^2r^2}} + \sum_i Air^i,$$

where

z is a vector height of an aspheric surface, r is a radial coordinate of the aspheric surface, R is a curvature radius of an aspheric vertex, K is a conic constant, Ai is an aspheric coefficient, and i is 4, 6, 8, ..., or 30. The lenses may be simulated according to obtained aspheric surface types and the like, so that the camera module 101 shown in FIG. 16 is finally obtained.

For optical parameters of the lens assembly that includes the foregoing lenses, refer to Table 12.

Table 12 shows the optical parameters of the lens assembly according to Embodiment 4 of this application.

| Focal length EFL | 6.44 mm |
|---|---|
| f-number f-number | 1.88 |
| Half image height IMH | 6.47 mm |
| Half field of view | 43.29° |
| Design wavelength | 650 nm, 610 nm, 555 nm, 510 nm, and 470 nm |

It can be learned from Table 12 that the lens assembly 10 according to Embodiment 4 of this application is a wide-angle lens featuring both a wide aperture and a large target surface.

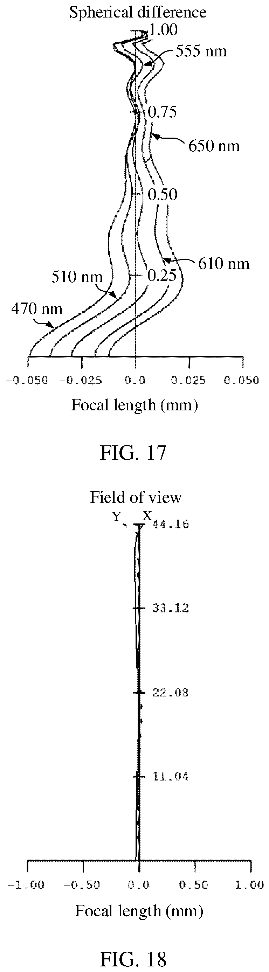

FIG. 17 is a curve diagram of an axial chromatic aberration of a lens assembly according to Embodiment 4 of this application. The axial chromatic aberration shown in FIG. 17 is an axial chromatic aberration obtained after light with wavelengths of 650 nm, 610 nm, 555 nm, 510 nm, and 470 nm passes through the lens assembly 10. It can be learned from FIG. 17 that the axial chromatic aberration obtained after the light passes through the lens assembly 10 is relatively small.

FIG. 18 is a diagram of astigmatism and field curvature of a lens assembly according to Embodiment 4 of this application. FIG. 18 shows a diagram of astigmatism and field curvature obtained after light with a wavelength of 555 nm passes through the lens assembly 10. It can be learned from FIG. 18 that the lens assembly 10 has relatively small field curvature in both a sagittal direction and a meridional direction, and has relatively high imaging quality.

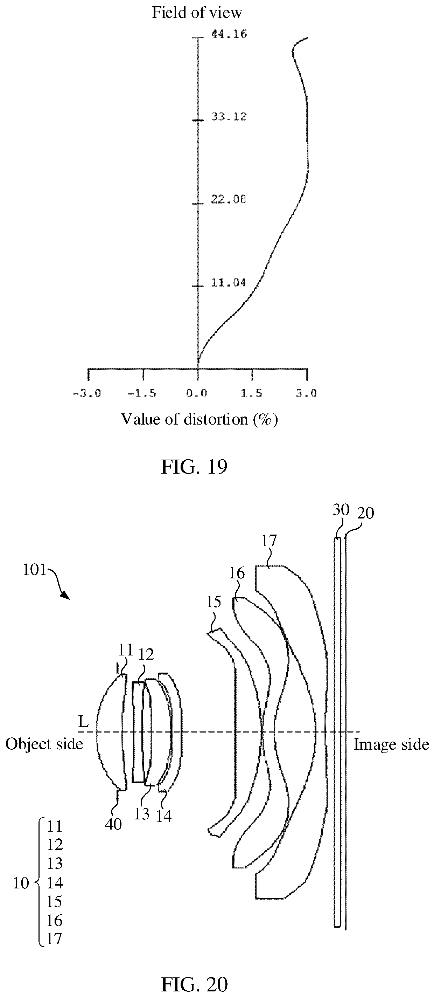

FIG. 19 is a distortion curve diagram of a lens assembly according to Embodiment 4 of this application. FIG. 19 shows a distortion curve obtained after light with a wavelength of 555 nm passes through the lens assembly 10. It can be learned from FIG. 19 that imaging through the lens assembly 10 has a relatively small amount of distortion, and a difference between an imaging shape and an ideal shape is relatively small. This meets a deformation difference requirement, and ensures high imaging quality.

Embodiment 5

FIG. 20 is a simulation diagram of a camera module in an operating state according to Embodiment 5 of this application.

In this embodiment, refer to FIG. 20. A quantity N of lenses in a lens assembly 10 may be 7, and a first lens 11, a second lens 12, a third lens 13, a fourth lens 14, a fifth lens 15, a sixth lens 16, and a seventh lens 17 may be sequentially arranged from an object side to an image side along an optical axis.

There is a maximum gap between the fourth lens 14 and the fifth lens 15.

A half image height IMH of the lens assembly 10 is 6.45 mm, a total track length TTL of the lens assembly 10 is 8.02 mm, and the maximum gap Dgap is 1.73 mm. The half image height IMH of the lens assembly 10, the total track length TTL of the lens assembly 10, and the maximum gap Dgap satisfy: (TTL-Dgap) * TTL/IMH$^2$=1.21, and (TTL-Dgap)/(2 * IMH) =0.49.

When the camera module 101 is in a non-operating state, the maximum gap is compressed, and the total track length of the lens assembly 10 is: TTL-Dgap=6.29 mm.

The first lens 11 has a positive focal power, and a focal length f1 of the first lens 11 is 7.46 mm. A focal length EFL of the lens assembly 10 is 6.35 mm. The focal length f1 of the first lens 11 and the focal length EFL of the lens assembly 10 satisfy: f1/EFL=1.18.

The second lens 12 has a negative focal power, and a focal length f2 of the second lens 12 is -18.97 mm.

The fourth lens 14 has a negative focal power, and a focal length f4 of the fourth lens 14 is -49.12 mm.

The fifth lens 15 has a positive focal power, and a focal length f5 of the fifth lens 15 is 9.30 mm.

A focal length f6 of the sixth lens 16 is -63.82 mm. The focal length f6 of the sixth lens 16 and the focal length EFL of the lens assembly 10 satisfy: EFL/f6=-0.10.

An f-number F# of the lens assembly 10 is 1.77.

A half field of view HFOV of the lens assembly 10 is 44.7°.

The total track length TTL of the lens assembly 10 and the focal length EFL of the lens assembly 10 satisfy:

$$EFL/TTL=0.79.$$

An Abbe number vd1 of the first lens 11 is 56.04, and an Abbe number vd2 of the second lens 12 is 9.22. The Abbe number vd1 of the first lens 11 and the Abbe number vd2 of the second lens 12 satisfy: vd1-vd2=36.82.

A curvature radius R9 of an object-side surface of the fifth lens 15 is -213.47 mm, and a curvature radius R10 of an image-side surface of the fifth lens 15 is -5.45 mm. The curvature radius R9 of the object-side surface of the fifth lens 15 and the curvature radius R10 of the image-side surface of the fifth lens 15 satisfy: R10/R9=0.03.

Table 13 shows optical parameters of optical elements in the camera module according to Embodiment 5 of this application.

|  |  | R |  | d |  | nd |  | vd |  |
|---|---|---|---|---|---|---|---|---|---|
| S1 | R0 | ∞ | d0 | -0.67 |  |  |  |  |  |
| L1 | R1 | 2.81 | d1 | 0.83 | nd1 | 1.54 | vd1 | 56.04 |  |
|  | R2 | 8.46 | d2 | 0.37 |  |  |  |  |  |
| L2 | R3 | 449.82 | d3 | 0.27 | nd2 | 1.68 | vd2 | 19.22 |  |
|  | R4 | 12.48 | d4 | 0.32 |  |  |  |  |  |
| L3 | R5 | -14.62 | d5 | 0.63 | nd3 | 1.54 | vd3 | 56.04 |  |
|  | R6 | -4.67 | d6 | 0.03 |  |  |  |  |  |
| L4 | R7 | -47.49 | d7 | 0.29 | nd4 | 1.68 | vd4 | 19.22 |  |
|  | R8 | 111.07 | d8 | 1.73 |  |  |  |  |  |
| L5 | R9 | -213.47 | d9 | 0.83 | nd5 | 1.60 | vd5 | 28.76 |  |
|  | R10 | -5.45 | d10 | 0.04 |  |  |  |  |  |
| L6 | R11 | 2.90 | d11 | 0.37 | nd6 | 1.56 | vd6 | 40.59 |  |
|  | R12 | 2.56 | d12 | 1.36 |  |  |  |  |  |
| L7 | R13 | -3.41 | d13 | 0.30 | nd7 | 1.68 | vd7 | 19.22 |  |
|  | R14 | 22.71 | d14 | 0.28 |  |  |  |  |  |
| IR | R15 | ∞ | d15 | 0.21 | ndg | 1.52 | vdg | 64.17 |  |
|  | R16 | ∞ | d16 | 0.17 |  |  |  |  |  |

L1 is the first lens 11, L2 is the second lens 12, L3 is the third lens 13, L4 is the fourth lens 14, L5 is the fifth lens 15, L6 is the sixth lens 16, L7 is the seventh lens 17, S1 is an aperture stop 40, and IR is an optical filter 30.

R is a curvature radius of an optical element (for example, a lens or the optical filter) at a corresponding position on the optical axis. For specific meanings of R0, R1, ..., and R16, refer to Embodiment 1. Details are not described again in this embodiment of this application.

d is a thickness of an optical element along the optical axis or a thickness of a gap between optical elements. For specific meanings of d0, d1, ..., and d16, refer to Embodiment 1. Details are not described again in this embodiment of this application.

nd is a refractive index of each optical element irradiated by a d line. For specific meanings of nd1, nd2, ..., and ndg, refer to Embodiment 1. Details are not described again in this embodiment of this application.

vd is an Abbe number of an optical element. For specific meanings of vd1, vd2, ..., and vdg, refer to Embodiment 1. Details are not described again in this embodiment of this application.

Table 14 shows aspheric coefficients of lenses in the lens assembly according to Embodiment 5 of this application.

|  |  | Conic coefficient K | A4 | A6 | A8 | A10 |
|---|---|---|---|---|---|---|
| L1 | R1 | 0 | 1.36E-03 | 8.32E-04 | -2.98E-04 | 1.69E-04 |
|  | R2 | 0 | -3.14E-03 | -1.33E-03 | 3.45E-03 | -3.80E-03 |
| L2 | R3 | 0 | -2.05E-02 | 7.28E-03 | -1.32E-03 | 2.60E-03 |
|  | R4 | 0 | -1.53E-02 | 4.86E-03 | 3.00E-03 | -3.70E-03 |
| L3 | R5 | 0 | -3.32E-03 | -7.77E-03 | 2.79E-03 | -2.13E-03 |
|  | R6 | 0 | -3.37E-02 | 6.63E-02 | -1.07E-01 | 1.06E-01 |
| L4 | R7 | 0 | -7.40E-02 | 6.10E-02 | -7.74E-02 | 6.67E-02 |
|  | R8 | 0 | -4.67E-02 | 8.97E-03 | 5.00E-05 | -5.27E-03 |

(continued)

|  |  | Conic coefficient K | A4 | A6 | A8 | A10 |
|---|---|---|---|---|---|---|
| L5 | R9 | 0 | 7.80E-03 | -3.90E-03 | 1.14E-03 | -2.36E-04 |
| L5 | R10 | 0 | 2.09E-03 | -1.31E-04 | 6.10E-04 | -2.91E-04 |
| L6 | R11 | -1 | -3.40E-02 | 1.43E-03 | 1.21E-04 | -7.60E-05 |
| L6 | R12 | -1 | -2.43E-02 | 2.19E-04 | 3.54E-04 | -9.00E-05 |
| L7 | R13 | -1 | 9.78E-03 | 1.12E-03 | -9.04E-04 | 1.84E-04 |
| L7 | R14 | 0 | -1.97E-03 | 3.87E-04 | -2.11E-04 | 3.30E-05 |
|  |  | A12 | A14 | A16 | A18 | A20 |
| L1 | R1 | -3.10E-05 | 3.00E-06 | -1.67E-07 | 3.95E-09 | 1.04E-09 |
| L1 | R2 | 2.52E-03 | -1.01E-03 | 2.36E-04 | -2.90E-05 | 1.00E-06 |
| L2 | R3 | -3.13E-03 | 1.94E-03 | -6.82E-04 | 1.31E-04 | -1.10E-05 |
| L2 | R4 | 2.67E-03 | -1.43E-03 | 4.95E-04 | -9.60E-05 | 8.00E-06 |
| L3 | R5 | 1.60E-03 | -1.04E-03 | 4.03E-04 | -7.80E-05 | 6.00E-06 |
| L3 | R6 | -6.96E-02 | 2.99E-02 | -8.01E-03 | 1.21E-03 | -7.60E-05 |
| L4 | R7 | -3.89E-02 | 1.48E-02 | -3.55E-03 | 4.80E-04 | -2.60E-05 |
| L4 | R8 | 5.09E-03 | -2.54E-03 | 7.11E-04 | -1.02E-04 | 4.00E-06 |
| L5 | R9 | 2.00E-05 | 4.39E-07 | -2.00E-07 | 1.18E-08 | -1.17E-10 |
| L5 | R10 | 6.00E-05 | -8.00E-06 | 1.00E-06 | -3.22E-08 | 1.26E-09 |
| L6 | R11 | 1.40E-05 | -1.00E-06 | 4.91E-08 | -1.11E-09 | 1.06E-11 |
| L6 | R12 | 1.40E-05 | -1.00E-06 | 9.56E-08 | -3.95E-09 | 9.00E-11 |
| L7 | R13 | -1.90E-05 | 1.00E-06 | -4.27E-08 | 7.56E-10 | -1.25E-13 |
| L7 | R14 | -3.00E-06 | 1.21E-07 | -3.38E-09 | 5.28E-11 | -3.44E-13 |
|  |  | A22 | A24 | A26 | A28 | A30 |
| L1 | R1 | 0.00E+00 | 0.00E+00 | 0.00E+00 | 0.00E+00 | 0.00E+00 |
| L1 | R2 | 0.00E+00 | 0.00E+00 | 0.00E+00 | 0.00E+00 | 0.00E+00 |
| L2 | R3 | 0.00E+00 | 0.00E+00 | 0.00E+00 | 0.00E+00 | 0.00E+00 |
| L2 | R4 | 0.00E+00 | 0.00E+00 | 0.00E+00 | 0.00E+00 | 0.00E+00 |
| L3 | R5 | 0.00E+00 | 0.00E+00 | 0.00E+00 | 0.00E+00 | 0.00E+00 |
| L3 | R6 | 1.00E-06 | -3.78E-07 | 0.00E+00 | 0.00E+00 | 0.00E+00 |
| L4 | R7 | -3.01E-07 | -1.11E-07 | 0.00E+00 | 0.00E+00 | 0.00E+00 |
| L4 | R8 | 3.16E-07 | 0.00E+00 | 0.00E+00 | 0.00E+00 | 0.00E+00 |
| L5 | R9 | -1.48E-12 | 0.00E+00 | 0.00E+00 | 0.00E+00 | 0.00E+00 |
| L5 | R10 | -7.75E-11 | 4.64E-12 | -1.54E-13 | 2.58E-15 | 0.00E+00 |
| L6 | R11 | 2.08E-14 | -2.06E-16 | -3.69E-17 | 0.00E+00 | 0.00E+00 |
| L6 | R12 | -1.14E-12 | 2.48E-14 | -5.79E-16 | -6.23E-20 | 0.00E+00 |
| L7 | R13 | -3.26E-13 | 1.36E-14 | -4.26E-16 | 7.70E-18 | -6.94E-20 |
| L7 | R14 | 1.65E-16 | -9.16E-18 | 0.00E+00 | 0.00E+00 | 0.00E+00 |

It can be learned from Table 14 that the lenses in the lens assembly 10 are all aspherical lenses, that is, the lens assembly 10 includes 14 aspheric surfaces. An aspheric surface type z of each lens in the lens assembly 10 may be calculated according to the following aspheric formula:

$$z = \frac{\frac{1}{R}r^2}{1+\sqrt{1-(K+1)1/R^2r^2}} + \sum_i Air^i,$$

where

z is a vector height of an aspheric surface, r is a radial coordinate of the aspheric surface, R is a curvature radius of an aspheric vertex, K is a conic constant, Ai is an aspheric coefficient, and i is 4, 6, 8, ..., or 30. The lenses may be simulated according to obtained aspheric surface types and the like, so that the camera module 101 shown in FIG. 20 is finally obtained.

For optical parameters of the lens assembly that includes the foregoing lenses, refer to Table 15.

Table 15 shows the optical parameters of the lens assembly according to Embodiment 5 of this application.

| Focal length EFL | 6.35 mm |
|---|---|
| f-number f-number | 1.77 |
| Half image height IMH | 6.45 mm |
| Half field of view | 44.7° |
| Design wavelength | 650 nm, 610 nm, 555 nm, 510 nm, and 470 nm |

It can be learned from Table 15 that the lens assembly 10 according to Embodiment 5 of this application is a wide-angle lens featuring both a wide aperture and a large target surface.

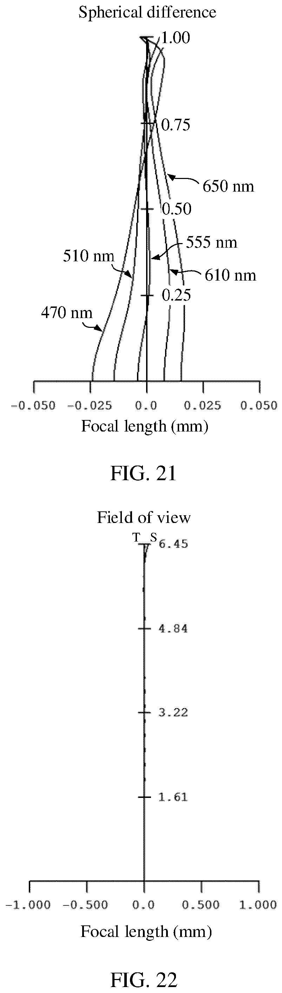

FIG. 21 is a curve diagram of an axial chromatic aberration of a lens assembly according to Embodiment 5 of this application. The axial chromatic aberration shown in FIG. 21 is an axial chromatic aberration obtained after light with wavelengths of 650 nm, 610 nm, 555 nm, 510 nm, and 470 nm passes through the lens assembly 10. It can be learned from FIG. 21 that the axial chromatic aberration obtained after the light passes through the lens assembly 10 is relatively small.

FIG. 22 is a diagram of astigmatism and field curvature of a lens assembly according to Embodiment 5 of this application. FIG. 22 shows a diagram of astigmatism and field curvature obtained after light with a wavelength of 555 nm passes through the lens assembly 10. It can be learned from FIG. 22 that the lens assembly 10 has relatively small field curvature in both a sagittal direction and a meridional direction, and has relatively high imaging quality.

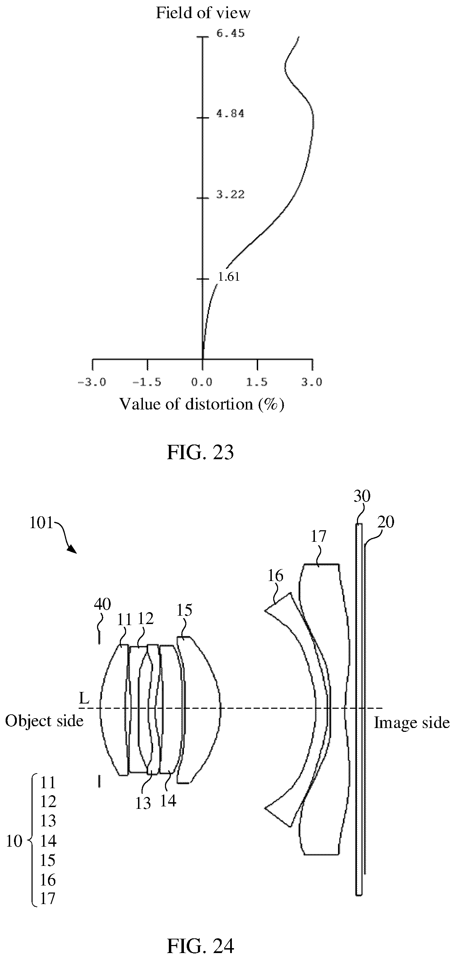

FIG. 23 is a distortion curve diagram of a lens assembly according to Embodiment 5 of this application. FIG. 23 shows a distortion curve obtained after light with a wavelength of 555 nm passes through the lens assembly 10. It can be learned from FIG. 23 that imaging through the lens assembly 10 has a relatively small amount of distortion, and a difference between an imaging shape and an ideal shape is relatively small. This meets a deformation difference requirement, and ensures high imaging quality.

Embodiment 6

FIG. 24 is a simulation diagram of a camera module in an operating state according to Embodiment 6 of this application.

In this embodiment, refer to FIG. 24. A quantity N of lenses in a lens assembly 10 may be 7, and a first lens 11, a second lens 12, a third lens 13, a fourth lens 14, a fifth lens 15, a sixth lens 16, and a seventh lens 17 may be sequentially arranged from an object side to an image side along an optical axis.

There is a maximum gap between the fifth lens 15 and the sixth lens 16.

A half image height IMH of the lens assembly 10 is 6.45 mm, a total track length TTL of the lens assembly 10 is 10.02 mm, and the maximum gap Dgap is 13.62 mm. The half image height IMH of the lens assembly 10, the total track length TTL of the lens assembly 10, and the maximum gap Dgap satisfy: (TTL-Dgap) * TTL/IMH$^2$=1.64, and (TTL-Dgap)/(2 * IMH)=0.51.

When the camera module 101 is in a non-operating state, the maximum gap is compressed, and the total track length of the lens assembly 10 is: TTL-Dgap=6.40 mm.

The first lens 11 has a positive focal power, and a focal length f1 of the first lens 11 is 8.43 mm. A focal length EFL of the lens assembly 10 is 7.20 mm. The focal length f1 of the first lens 11 and the focal length EFL of the lens assembly 10 satisfy: f1/EFL=1.17.

The second lens 12 has a negative focal power, and a focal length f2 of the second lens 12 is -10.81 mm.

The fourth lens 14 has a negative focal power, and a focal length f4 of the fourth lens 14 is -111.48 mm.

The fifth lens 15 has a positive focal power, and a focal length f5 of the fifth lens 15 is 7.09 mm.

A focal length f6 of the sixth lens 16 is -128.06 mm. The focal length f6 of the sixth lens 16 and the focal length EFL of the lens assembly 10 satisfy: EFL/f6=-0.06.

An f-number F# of the lens assembly 10 is 1.46.

A half field of view HFOV of the lens assembly 10 is 40.50°.

The total track length TTL of the lens assembly 10 and the focal length EFL of the lens assembly 10 satisfy:

$$EFL/TTL=0.72.$$

An Abbe number vd1 of the first lens 11 is 44.85, and an Abbe number vd2 of the second lens 12 is 19.25. The Abbe number vd1 of the first lens 11 and the Abbe number vd2 of the second lens 12 satisfy: vd1-vd2=25.60.

A curvature radius R9 of an object-side surface of the fifth lens 15 is -44.04 mm, and a curvature radius R10 of an image-side surface of the fifth lens 15 is -3.60 mm. The curvature radius R9 of the object-side surface of the fifth lens 15 and the curvature radius R10 of the image-side surface of the fifth lens 15 satisfy: R10/R9=0.08.

Table 16 shows optical parameters of optical elements in the camera module according to Embodiment 6 of this application.

| | | R | | d | | nd | | vd | |
|---|---|---|---|---|---|---|---|---|---|
| S1 | R0 | ∞ | d0 | 0.025 | | | | | |
| L1 | R1 | 4.35 | d1 | 0.94 | nd1 | 1.76 | vd1 | 44.85 |
| | R2 | 12.16 | d2 | 0.24 | | | | |
| L2 | R3 | -4.35 | d3 | 0.28 | nd2 | 1.68 | vd2 | 19.25 |
| | R4 | -10.96 | d4 | 0.35 | | | | |
| L3 | R5 | 3.52 | d5 | 0.28 | nd3 | 1.68 | vd3 | 19.25 |
| | R6 | 3.92 | d6 | 0.28 | | | | |
| L4 | R7 | -25.94 | d7 | 0.74 | nd4 | 1.64 | vd4 | 23.80 |
| | R8 | -41.20 | d8 | 0.10 | | | | |
| L5 | R9 | -44.04 | d9 | 1.35 | nd5 | 1.55 | vd5 | 56.14 |
| | R10 | -3.60 | d10 | 3.62 | | | | |
| L6 | R11 | -4.20 | d11 | 0.45 | nd6 | 1.68 | vd6 | 19.25 |
| | R12 | -4.61 | d12 | 0.10 | | | | |
| L7 | R13 | 67.32 | d13 | 0.55 | nd7 | 1.64 | vd7 | 23.80 |
| | R14 | 5.10 | d14 | 0.43 | | | | |
| IR | R15 | ∞ | d15 | 0.21 | ndg | 1.52 | vdg | 64.17 |
| | R16 | ∞ | d16 | 0.1 | | | | |

L1 is the first lens 11, L2 is the second lens 12, L3 is the third lens 13, L4 is the fourth lens 14, L5 is the fifth lens 15, L6 is the sixth lens 16, L7 is the seventh lens 17, S1 is an aperture stop 40, and IR is an optical filter 30.

R is a curvature radius of an optical element (for example, a lens or the optical filter) at a corresponding position on the optical axis. For specific meanings of R0, R1, ..., and R16, refer to Embodiment 1. Details are not described again in this embodiment of this application.

d is a thickness of an optical element along the optical axis or a thickness of a gap between optical elements. For specific meanings of d0, d1, ..., and d16, refer to Embodiment 1. Details are not described again in this embodiment of this application.

nd is a refractive index of each optical element irradiated by a d line. For specific meanings of nd1, nd2, ..., and ndg, refer to Embodiment 1. Details are not described again in this embodiment of this application.

vd is an Abbe number of an optical element. For specific meanings of vd1, vd2, ..., and vdg, refer to Embodiment 1. Details are not described again in this embodiment of this application.

Table 17 shows aspheric coefficients of lenses in the lens assembly according to Embodiment 6 of this application.

| | | | Conic coefficient K | A4 | A6 | A8 | A10 |
|---|---|---|---|---|---|---|---|
| L1 | | R1 | 0 | 1.12E-04 | -6.50E-04 | 6.74E-04 | -5.22E-04 |
| | | R2 | 0 | -2.92E-03 | -1.45E-03 | 1.51E-03 | -1.07E-03 |
| L2 | | R3 | 0 | 4.91E-02 | -1.35E-02 | 4.60E-03 | -1.69E-03 |
| | | R4 | 0 | 3.80E-02 | -2.13E-03 | -2.11E-03 | 1.44E-03 |
| L3 | | R5 | 0 | -4.33E-02 | 1.40E-02 | -1.06E-02 | 5.94E-03 |
| | | R6 | 0 | -3.15E-02 | 8.44E-03 | -5.96E-03 | 3.22E-03 |
| L4 | | R7 | 0 | -3.64E-03 | 1.84E-03 | -1.31E-03 | 6.91E-04 |
| | | R8 | 0 | -4.95E-03 | -3.72E-04 | -1.30E-05 | -2.18E-04 |
| L5 | | R9 | 0 | -3.73E-03 | -2.58E-04 | -1.56E-04 | -8.10E-05 |
| | | R10 | 0 | 1.20E-03 | -8.92E-04 | 6.69E-04 | -2.88E-04 |
| L6 | | R11 | 0 | 7.03E-03 | -1.68E-04 | 1.57E-04 | -5.60E-05 |
| | | R12 | 0 | -2.36E-03 | 2.86E-03 | -2.05E-04 | -5.50E-05 |
| L7 | | R13 | 0 | -4.05E-02 | 7.56E-03 | -8.67E-04 | 6.80E-05 |
| | | R14 | -1 | -2.31E-02 | 3.44E-03 | -3.93E-04 | 3.10E-05 |
| | | | A12 | A14 | A16 | A18 | A20 |
| L1 | | R1 | 2.40E-04 | -6.70E-05 | 1.10E-05 | -1.00E-06 | 4.16E-08 |
| | | R2 | 5.26E-04 | -1.53E-04 | 2.50E-05 | -2.00E-06 | 8.03E-08 |
| L2 | | R3 | 5.49E-04 | -1.25E-04 | 1.70E-05 | -1.00E-06 | 3.81E-08 |
| | | R4 | -5.61E-04 | 1.35E-04 | -1.90E-05 | 1.00E-06 | -3.93E-08 |
| L3 | | R5 | -2.42E-03 | 6.45E-04 | -1.06E-04 | 1.00E-05 | -3.81E-07 |
| | | R6 | -1.24E-03 | 3.18E-04 | -5.00E-05 | 4.00E-06 | -1.65E-07 |
| L4 | | R7 | -1.77E-04 | 2.50E-05 | -2.00E-06 | 1.78E-07 | -7.26E-09 |
| | | R8 | 1.36E-04 | -3.70E-05 | 5.00E-06 | -4.01E-07 | 9.48E-09 |
| L5 | | R9 | 6.90E-05 | -1.80E-05 | 2.00E-06 | -1.64E-07 | 4.42E-09 |
| | | R10 | 7.40E-05 | -1.10E-05 | 1.00E-06 | -3.38E-08 | 3.46E-10 |
| L6 | | R11 | 6.00E-06 | -4.11E-07 | 2.21E-08 | -1.35E-09 | 7.12E-11 |
| | | R12 | 1.50E-05 | -2.00E-06 | 1.62E-07 | -9.55E-09 | 3.63E-10 |
| L7 | | R13 | -4.00E-06 | 1.25E-07 | -2.68E-09 | 3.23E-11 | -1.59E-13 |
| | | R14 | -2.00E-06 | 5.76E-08 | -1.22E-09 | 1.43E-11 | -6.78E-14 |
| | | | A22 | A24 | A26 | A28 | A30 |
| L1 | | R1 | 0.00E+00 | 0.00E+00 | 0.00E+00 | 0.00E+00 | 0.00E+00 |
| | | R2 | 0.00E+00 | 0.00E+00 | 0.00E+00 | 0.00E+00 | 0.00E+00 |
| L2 | | R3 | 0.00E+00 | 0.00E+00 | 0.00E+00 | 0.00E+00 | 0.00E+00 |
| | | R4 | 0.00E+00 | 0.00E+00 | 0.00E+00 | 0.00E+00 | 0.00E+00 |
| L3 | | R5 | 0.00E+00 | 0.00E+00 | 0.00E+00 | 0.00E+00 | 0.00E+00 |
| | | R6 | 0.00E+00 | 0.00E+00 | 0.00E+00 | 0.00E+00 | 0.00E+00 |
| L4 | | R7 | 0.00E+00 | 0.00E+00 | 0.00E+00 | 0.00E+00 | 0.00E+00 |
| | | R8 | 2.42E-10 | 0.00E+00 | 0.00E+00 | 0.00E+00 | 0.00E+00 |

(continued)

|  |  | A22 | A24 | A26 | A28 | A30 |
|---|---|---|---|---|---|---|
| L5 | R9 | 0.00E+00 | 0.00E+00 | 0.00E+00 | 0.00E+00 | 0.00E+00 |
| | R10 | -4.53E-12 | 1.56E-13 | 0.00E+00 | 0.00E+00 | 0.00E+00 |
| L6 | R11 | -2.30E-12 | 3.28E-14 | 0.00E+00 | 0.00E+00 | 0.00E+00 |
| | R12 | -7.98E-12 | 7.66E-14 | 0.00E+00 | 0.00E+00 | 0.00E+00 |
| L7 | R13 | -1.43E-16 | -1.03E-19 | 0.00E+00 | 0.00E+00 | 0.00E+00 |
| | R14 | -4.94E-17 | -7.56E-20 | 0.00E+00 | 0.00E+00 | 0.00E+00 |

It can be learned from Table 17 that the lenses in the lens assembly 10 are all aspherical lenses, that is, the lens assembly 10 includes 14 aspheric surfaces. An aspheric surface type z of each lens in the lens assembly 10 may be calculated according to the following aspheric formula:

$$z = \frac{\frac{1}{R}r^2}{1+\sqrt{1-(K+1)1/R^2r^2}} + \sum_i Air^i,$$

where

z is a vector height of an aspheric surface, r is a radial coordinate of the aspheric surface, R is a curvature radius of an aspheric vertex, K is a conic constant, Ai is an aspheric coefficient, and i is 4, 6, 8, ..., or 30. The lenses may be simulated according to obtained aspheric surface types and the like, so that the camera module 101 shown in FIG. 24 is finally obtained.

For optical parameters of the lens assembly that includes the foregoing lenses, refer to Table 18.

Table 18 shows the optical parameters of the lens assembly according to Embodiment 6 of this application.

| Focal length EFL | 7.20 mm |
|---|---|
| f-number f-number | 1.46 |
| Half image height IMH | 6.25 mm |
| Half field of view | 40.50° |
| Design wavelength | 650 nm, 610 nm, 555 nm, 510 nm, and 470 nm |

It can be learned from Table 18 that the lens assembly 10 according to Embodiment 6 of this application is a wide-angle lens featuring both a wide aperture and a large target surface.

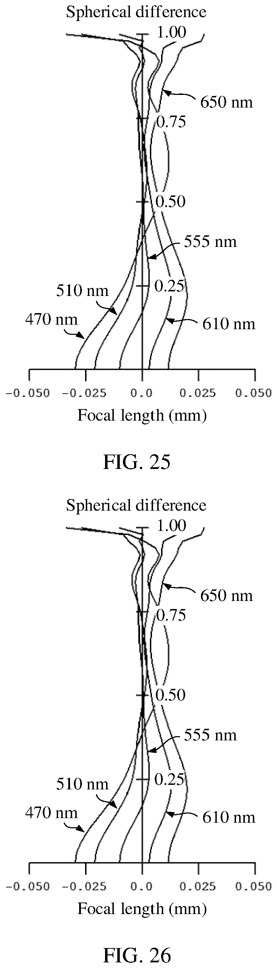

FIG. 25 is a curve diagram of an axial chromatic aberration of a lens assembly according to Embodiment 6 of this application. The axial chromatic aberration shown in FIG. 25 is an axial chromatic aberration obtained after light with wavelengths of 650 nm, 610 nm, 555 nm, 510 nm, and 470 nm passes through the lens assembly 10. It can be learned from FIG. 25 that the axial chromatic aberration obtained after the light passes through the lens assembly 10 is relatively small.

FIG. 26 is a diagram of astigmatism and field curvature of a lens assembly according to Embodiment 6 of this application. FIG. 26 shows a diagram of astigmatism and field curvature obtained after light with a wavelength of 555 nm passes through the lens assembly 10. It can be learned from FIG. 26 that the lens assembly 10 has relatively small field curvature in both a sagittal direction and a meridional direction, and has relatively high imaging quality.

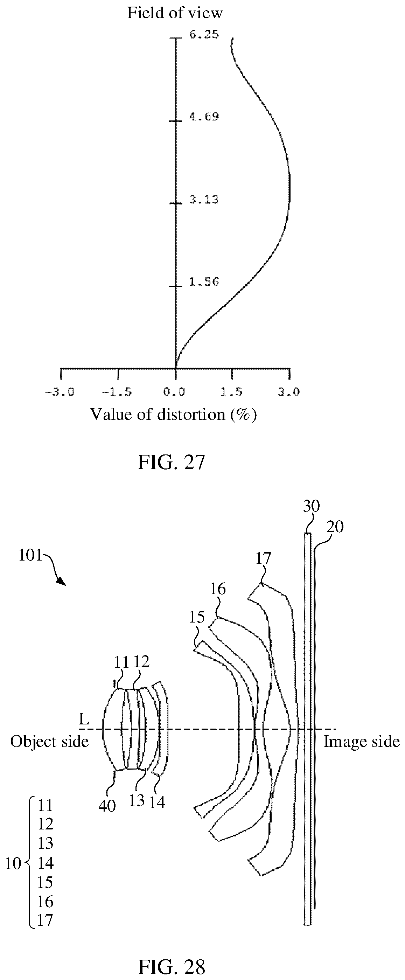

FIG. 27 is a distortion curve diagram of a lens assembly according to Embodiment 6 of this application. FIG. 27 shows a distortion curve obtained after light with a wavelength of 555 nm passes through the lens assembly 10. It can be learned from FIG. 27 that imaging through the lens assembly 10 has a relatively small amount of distortion, and a difference between an imaging shape and an ideal shape is relatively small. This meets a deformation difference requirement, and ensures high imaging quality.

Embodiment 7

FIG. 28 is a simulation diagram of a camera module in an operating state according to Embodiment 7 of this application.

In this embodiment, refer to FIG. 28. A quantity N of lenses in a lens assembly 10 may be 7, and a first lens 11, a second lens 12, a third lens 13, a fourth lens 14, a fifth lens 15, a sixth lens 16, and a seventh lens 17 may be sequentially arranged from an object side to an image side along an optical axis.

There is a maximum gap between the fourth lens 14 and the fifth lens 15.

A half image height IMH of the lens assembly 10 is 6.45 mm, a total track length TTL of the lens assembly 10 is 7.54 mm, and the maximum gap Dgap is 2.53 mm. The half image height IMH of the lens assembly 10, the total track length TTL of the lens assembly 10, and the maximum gap Dgap satisfy: $(TTL-Dgap) * TTL/IMH^2 = 0.91$, and $(TTL-Dgap)/(2 * IMH) = 0.39$.

When the camera module 101 is in a non-operating state, the maximum gap is compressed, and the total track length of the lens assembly 10 is: $TTL-Dgap = 5.01$ mm.

The first lens 11 has a positive focal power, and a focal length f1 of the first lens 11 is 6.97 mm. A focal length EFL of the lens assembly 10 is 6.41 mm. The focal length f1 of the first lens 11 and the focal length EFL of the lens assembly 10 satisfy: $f1/EFL = 1.09$.

The second lens 12 has a negative focal power, and a focal length f2 of the second lens 12 is -15.23 mm.

The fourth lens 14 has a negative focal power, and a focal length f4 of the fourth lens 14 is -139.24 mm.

The fifth lens 15 has a positive focal power, and a focal length f5 of the fifth lens 15 is 13.18 mm.

A focal length f6 of the sixth lens 16 is -67.42 mm. The focal length f6 of the sixth lens 16 and the focal length EFL of the lens assembly 10 satisfy: $EFL/f6 = -0.01$.

An f-number F# of the lens assembly 10 is 2.17.

A half field of view HFOV of the lens assembly 10 is 44.32°.

The total track length TTL of the lens assembly 10 and the focal length EFL of the lens assembly 10 satisfy:

$$EFL/TTL = 0.85.$$

An Abbe number vd1 of the first lens 11 is 56.04, and an Abbe number vd2 of the second lens 12 is 19.22. The Abbe number vd1 of the first lens 11 and the Abbe number vd2 of the second lens 12 satisfy: $vd1-vd2 = 36.82$.

A curvature radius R9 of an object-side surface of the fifth lens 15 is -73.81 mm, and a curvature radius R10 of an image-side surface of the fifth lens 15 is -7.63 mm. The curvature radius R9 of the object-side surface of the fifth lens 15 and the curvature radius R10 of the image-side surface of the fifth lens 15 satisfy: $R10/R9 = 0.10$.

Table 19 shows optical parameters of optical elements in the camera module according to Embodiment 7 of this application.

| | | R | | d | | nd | | vd | |
|---|---|---|---|---|---|---|---|---|---|
| S1 | R0 | ∞ | d0 | -0.40 | | | | | |
| L1 | R1 | 2.48 | d1 | 0.68 | nd1 | 1.54 | vd1 | 56.04 |
| | R2 | 6.67 | d2 | 0.34 | | | | |
| L2 | R3 | -6.39 | d3 | 0.27 | nd2 | 1.68 | vd2 | 19.22 |
| | R4 | -17.08 | d4 | 0.22 | | | | |
| L3 | R5 | -7.67 | d5 | 0.49 | nd3 | 1.54 | vd3 | 50.35 |
| | R6 | -3.30 | d6 | 0.03 | | | | |
| L4 | R7 | 20.67 | d7 | 0.28 | nd4 | 1.68 | vd4 | 19.22 |
| | R8 | 16.86 | d8 | 2.53 | | | | |
| L5 | R9 | -73.81 | d9 | 0.54 | nd5 | 1.64 | vd5 | 22.17 |
| | R10 | -7.63 | d10 | 0.04 | | | | |
| L6 | R11 | 3.02 | d11 | 0.30 | nd6 | 1.60 | vd6 | 29.30 |
| | R12 | 2.70 | d12 | 0.93 | | | | |
| L7 | R13 | -2.09 | d13 | 0.30 | nd7 | 1.68 | vd7 | 19.22 |
| | R14 | -10.28 | d14 | 0.24 | | | | |

(continued)

| | | R | | d | | nd | | vd | |
|---|---|---|---|---|---|---|---|---|---|
| IR | R15 | ∞ | d15 | 0.21 | ndg | 1.52 | vdg | 64.17 |
| | R16 | ∞ | d16 | 0.15 | | | | |

L1 is the first lens 11, L2 is the second lens 12, L3 is the third lens 13, L4 is the fourth lens 14, L5 is the fifth lens 15, L6 is the sixth lens 16, L7 is the seventh lens 17, S1 is an aperture stop 40, and IR is an optical filter 30.

R is a curvature radius of an optical element (for example, a lens or the optical filter) at a corresponding position on the optical axis. For specific meanings of R0, R1, ..., and R16, refer to Embodiment 1. Details are not described again in this embodiment of this application.

d is a thickness of an optical element along the optical axis or a thickness of a gap between optical elements. For specific meanings of d0, d1, ..., and d16, refer to Embodiment 1. Details are not described again in this embodiment of this application.

nd is a refractive index of each optical element irradiated by a d line. For specific meanings of nd1, nd2, ..., and ndg, refer to Embodiment 1. Details are not described again in this embodiment of this application.

vd is an Abbe number of an optical element. For specific meanings of vd1, vd2, ..., and vdg, refer to Embodiment 1. Details are not described again in this embodiment of this application.

Table 20 shows aspheric coefficients of lenses in the lens assembly according to Embodiment 7 of this application.

| | | Conic coefficient K | A4 | A6 | A8 | A10 |
|---|---|---|---|---|---|---|
| L1 | R1 | 0 | 2.22E-03 | 1.09E-03 | -2.55E-04 | 3.08E-04 |
| | R2 | 0 | -2.98E-03 | -5.37E-03 | 1.36E-02 | -2.22E-02 |
| L2 | R3 | 0 | -2.02E-02 | 1.26E-02 | -4.28E-03 | 7.40E-03 |
| | R4 | 0 | -1.96E-02 | 4.03E-03 | 7.96E-03 | -4.48E-03 |
| L3 | R5 | 0 | -8.04E-03 | -2.57E-02 | 1.83E-02 | -2.11E-02 |
| | R6 | 0 | -3.36E-03 | -1.49E-02 | 6.49E-03 | -4.61E-03 |
| L4 | R7 | 0 | -6.24E-02 | 1.31E-02 | -1.10E-02 | -2.52E-03 |
| | R8 | 0 | -5.44E-02 | 1.49E-02 | -1.15E-02 | 5.70E-03 |
| L5 | R9 | 0 | -9.33E-04 | -5.65E-03 | 2.59E-03 | -1.42E-03 |
| | R10 | 0 | -2.57E-02 | 8.63E-03 | -3.35E-03 | 1.08E-03 |
| L6 | R11 | -1 | -6.63E-02 | 9.28E-03 | -3.34E-03 | 1.12E-03 |
| | R12 | -1 | -4.04E-02 | 1.05E-03 | 1.36E-03 | -3.68E-04 |
| L7 | R13 | -1 | 1.90E-02 | 8.92E-03 | -3.18E-03 | 5.00E-04 |
| | R14 | 0 | 3.90E-03 | 1.68E-03 | -5.47E-04 | 7.50E-05 |
| | | A12 | A14 | A16 | A18 | A20 |
| L1 | R1 | -6.40E-05 | 6.00E-06 | 1.44E-07 | 0.00E+00 | 0.00E+00 |
| | R2 | 2.20E-02 | -1.30E-02 | 4.40E-03 | -7.76E-04 | 5.50E-05 |
| L2 | R3 | -7.78E-03 | 3.79E-03 | -9.23E-04 | 9.80E-05 | -1.00E-06 |
| | R4 | 2.85E-04 | 9.30E-05 | 7.50E-05 | -3.20E-05 | 3.00E-06 |
| L3 | R5 | 2.71E-02 | -2.32E-02 | 1.12E-02 | -2.69E-03 | 2.05E-04 |
| | R6 | 6.11E-03 | -5.18E-03 | 2.22E-03 | -4.20E-04 | 9.00E-06 |
| L4 | R7 | 1.65E-02 | -1.81E-02 | 9.53E-03 | -2.57E-03 | 2.82E-04 |
| | R8 | -8.08E-04 | -1.01E-03 | 6.94E-04 | -1.83E-04 | 1.70E-05 |
| L5 | R9 | 4.93E-04 | -1.15E-04 | 1.90E-05 | -3.00E-06 | 4.18E-07 |
| | R10 | -3.85E-04 | 1.35E-04 | -4.00E-05 | 9.00E-06 | -1.00E-06 |

(continued)

| | | Conic coefficient K | A4 | A6 | A8 | A10 |
|---|---|---|---|---|---|---|
| L6 | R11 | -2.08E-04 | 2.10E-05 | -1.00E-06 | 1.05E-08 | 2.73E-09 |
| | R12 | 4.90E-05 | -4.00E-06 | 2.42E-07 | -9.37E-09 | 2.10E-10 |
| L7 | R13 | -4.60E-05 | 3.00E-06 | -9.08E-08 | 1.70E-09 | -1.16E-11 |
| | R14 | -6.00E-06 | 2.89E-07 | -8.52E-09 | 1.38E-10 | -8.74E-13 |
| | | A22 | A24 | A26 | A28 | A30 |
| L1 | R1 | 0.00E+00 | 0.00E+00 | 0.00E+00 | 0.00E+00 | 0.00E+00 |
| | R2 | 0.00E+00 | 0.00E+00 | 0.00E+00 | 0.00E+00 | 0.00E+00 |
| L2 | R3 | 0.00E+00 | 0.00E+00 | 0.00E+00 | 0.00E+00 | 0.00E+00 |
| | R4 | 0.00E+00 | 0.00E+00 | 0.00E+00 | 0.00E+00 | 0.00E+00 |
| L3 | R5 | 1.40E-05 | 0.00E+00 | 0.00E+00 | 0.00E+00 | 0.00E+00 |
| | R6 | 4.00E-06 | 0.00E+00 | 0.00E+00 | 0.00E+00 | 0.00E+00 |
| L4 | R7 | -1.00E-06 | 0.00E+00 | 0.00E+00 | 0.00E+00 | 0.00E+00 |
| | R8 | 3.78E-07 | 0.00E+00 | 0.00E+00 | 0.00E+00 | 0.00E+00 |
| L5 | R9 | -5.74E-08 | 5.78E-09 | -3.81E-10 | 1.49E-11 | -2.57E-13 |
| | R10 | 1.77E-07 | -1.46E-08 | 7.91E-10 | -2.56E-11 | 3.73E-13 |
| L6 | R11 | -2.84E-10 | 1.90E-11 | -8.57E-13 | 2.31E-14 | -2.90E-16 |
| | R12 | -1.93E-12 | 2.13E-14 | -1.70E-16 | -4.86E-17 | 3.07E-19 |
| L7 | R13 | -2.93E-14 | -6.29E-16 | 4.76E-18 | -9.32E-20 | 0.00E+00 |
| | R14 | -1.82E-15 | 1.95E-17 | -3.01E-19 | -3.52E-22 | 0.00E+00 |

It can be learned from Table 20 that the lenses in the lens assembly 10 are all aspherical lenses, that is, the lens assembly 10 includes 14 aspheric surfaces. An aspheric surface type z of each lens in the lens assembly 10 may be calculated according to the following aspheric formula:

$$z = \frac{\frac{1}{R}r^2}{1+\sqrt{1-(K+1)1/R^2r^2}} + \sum_i Air^i,$$

where

z is a vector height of an aspheric surface, r is a radial coordinate of the aspheric surface, R is a curvature radius of an aspheric vertex, K is a conic constant, Ai is an aspheric coefficient, and i is 4, 6, 8, ..., or 30. The lenses may be simulated according to obtained aspheric surface types and the like, so that the camera module 101 shown in FIG. 28 is finally obtained.

For optical parameters of the lens assembly that includes the foregoing lenses, refer to Table 21.

Table 21 shows the optical parameters of the lens assembly according to Embodiment 7 of this application.

| | |
|---|---|
| Focal length EFL | 6.41 mm |
| f-number f-number | 2.17 |
| Half image height IMH | 6.45 mm |
| Half field of view | 44.32° |
| Design wavelength | 650 nm, 610 nm, 555 nm, 510 nm, and 470 nm |

It can be learned from Table 21 that the lens assembly 10 according to Embodiment 7 of this application is a wide-angle lens featuring both a wide aperture and a large target surface.

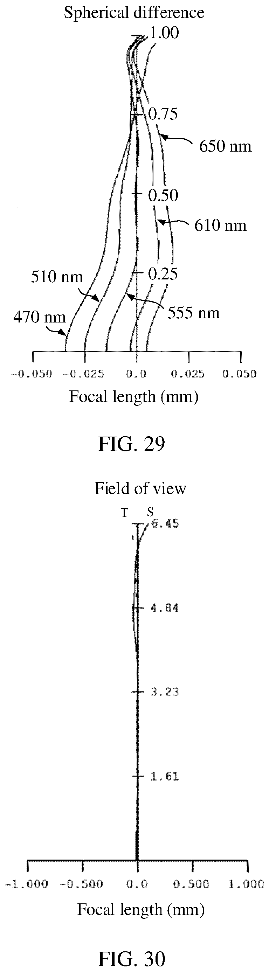

FIG. 29 is a curve diagram of an axial chromatic aberration of a lens assembly according to Embodiment 7 of this application. The axial chromatic aberration shown in FIG. 29 is an axial chromatic aberration obtained after light with wavelengths of 650 nm, 610 nm, 555 nm, 510 nm, and 470 nm passes through the lens assembly 10. It can be learned from FIG. 29 that the axial chromatic aberration obtained after the light passes through the lens assembly 10 is relatively small.

FIG. 30 is a diagram of astigmatism and field curvature of a lens assembly according to Embodiment 7 of this application. FIG. 30 shows a diagram of astigmatism and field curvature obtained after light with a wavelength of 555 nm passes through the lens assembly 10. It can be learned from FIG. 30 that the lens assembly 10 has relatively small field curvature in both a sagittal direction and a meridional direction, and has relatively high imaging quality.

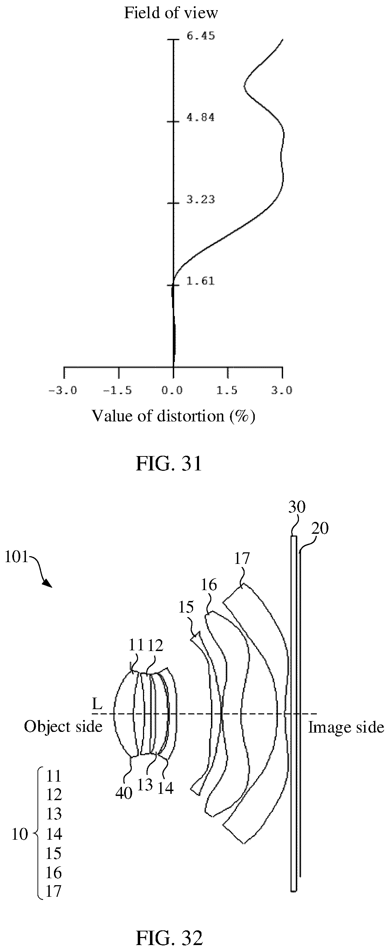

FIG. 31 is a distortion curve diagram of a lens assembly according to Embodiment 7 of this application. FIG. 31 shows a distortion curve obtained after light with a wavelength of 555 nm passes through the lens assembly 10. It can be learned from FIG. 31 that imaging through the lens assembly 10 has a relatively small amount of distortion, and a difference between an imaging shape and an ideal shape is relatively small. This meets a deformation difference requirement, and ensures high imaging quality.

Embodiment 8

FIG. 32 is a simulation diagram of a camera module in an operating state according to Embodiment 8 of this application.

In this embodiment, refer to FIG. 32. A quantity N of lenses in a lens assembly 10 may be 7, and a first lens 11, a second lens 12, a third lens 13, a fourth lens 14, a fifth lens 15, a sixth lens 16, and a seventh lens 17 may be sequentially arranged from an object side to an image side along an optical axis.

There is a maximum gap between the fourth lens 14 and the fifth lens 15.

A half image height IMH of the lens assembly 10 is 6.45 mm, a total track length TTL of the lens assembly 10 is 7.37 mm, and the maximum gap Dgap is 1.4 mm. The half image height IMH of the lens assembly 10, the total track length TTL of the lens assembly 10, and the maximum gap Dgap satisfy: $(TTL-Dgap) * TTL/IMH^2 = 1.06$, and $(TTL-Dgap)/(2 * IMH) = 0.46$.

When the camera module 101 is in a non-operating state, the maximum gap is compressed, and the total track length of the lens assembly 10 is: TTL-Dgap=5.97 mm.

The first lens 11 has a positive focal power, and a focal length f1 of the first lens 11 is 7.79 mm. A focal length EFL of the lens assembly 10 is 5.8 mm. The focal length f1 of the first lens 11 and the focal length EFL of the lens assembly 10 satisfy: f1/EFL=1.34.

The second lens 12 has a negative focal power, and a focal length f2 of the second lens 12 is -24.59 mm.

The fourth lens 14 has a negative focal power, and a focal length f4 of the fourth lens 14 is -64.69 mm.

The fifth lens 15 has a positive focal power, and a focal length f5 of the fifth lens 15 is 16.93 mm.

A focal length f6 of the sixth lens 16 is 41.82 mm. The focal length f6 of the sixth lens 16 and the focal length EFL of the lens assembly 10 satisfy: EFL/f6=0.14.

An f-number F# of the lens assembly 10 is 1.71.

A half field of view HFOV of the lens assembly 10 is 47.51°.

The total track length TTL of the lens assembly 10 and the focal length EFL of the lens assembly 10 satisfy:

$$EFL/TTL=0.79.$$

An Abbe number vd1 of the first lens 11 is 56.04, and an Abbe number vd2 of the second lens 12 is 19.22. The Abbe number vd1 of the first lens 11 and the Abbe number vd2 of the second lens 12 satisfy: vd1-vd2=36.82.

A curvature radius R9 of an object-side surface of the fifth lens 15 is -6.78 mm, and a curvature radius R10 of an image-side surface of the fifth lens 15 is -4.18 mm. The curvature radius R9 of the object-side surface of the fifth lens 15 and the curvature radius R10 of the image-side surface of the fifth lens 15 satisfy: R10/R9=0.62.

Table 22 shows optical parameters of optical elements in the camera module according to Embodiment 8 of this application.

| | | R | | d | | nd | | vd | |
|---|---|---|---|---|---|---|---|---|---|
| S1 | R0 | ∞ | d0 | -0.67 | | | | | |
| L1 | R1 | 2.61 | d1 | 0.77 | nd1 | 1.54 | vd1 | 56.04 |
| | R2 | 6.22 | d2 | 0.41 | | | | |
| L2 | R3 | -20.37 | d3 | 0.27 | nd2 | 1.68 | vd2 | 19.22 |
| | R4 | 91.32 | d4 | 0.19 | | | | |

(continued)

| | | R | | d | | nd | | vd | |
|---|---|---|---|---|---|---|---|---|---|
| L3 | R5 | -26.07 | d5 | 0.50 | nd3 | 1.54 | vd3 | 56.04 |  |
| | R6 | -5.34 | d6 | 0.03 | | | | | |
| L4 | R7 | 285.73 | d7 | 0.30 | nd4 | 1.68 | vd4 | 19.22 |  |
| | R8 | 37.95 | d8 | 1.40 | | | | | |
| L5 | R9 | -6.78 | d9 | 0.37 | nd5 | 1.61 | vd5 | 26.48 |  |
| | R10 | -4.18 | d10 | 0.04 | | | | | |
| L6 | R11 | 4.04 | d11 | 0.76 | nd6 | 1.56 | vd6 | 42.41 |  |
| | R12 | 4.56 | d12 | 1.43 | | | | | |
| L7 | R13 | -7.03 | d13 | 0.30 | nd7 | 1.68 | vd7 | 19.22 |  |
| | R14 | 5.54 | d14 | 0.25 | | | | | |
| IR | R15 | ∞ | d15 | 0.21 | ndg | 1.52 | vdg | 64.17 |  |
| | R16 | ∞ | d16 | 0.14 | | | | | |

L1 is the first lens 11, L2 is the second lens 12, L3 is the third lens 13, L4 is the fourth lens 14, L5 is the fifth lens 15, L6 is the sixth lens 16, L7 is the seventh lens 17, S1 is an aperture stop 40, and IR is an optical filter 30.

R is a curvature radius of an optical element (for example, a lens or the optical filter) at a corresponding position on the optical axis. For specific meanings of R0, R1, ..., and R16, refer to Embodiment 1. Details are not described again in this embodiment of this application.

d is a thickness of an optical element along the optical axis or a thickness of a gap between optical elements. For specific meanings of d0, d1, ..., and d16, refer to Embodiment 1. Details are not described again in this embodiment of this application.

nd is a refractive index of each optical element irradiated by a d line. For specific meanings of nd1, nd2, ..., and ndg, refer to Embodiment 1. Details are not described again in this embodiment of this application.

vd is an Abbe number of an optical element. For specific meanings of vd1, vd2, ..., and vdg, refer to Embodiment 1. Details are not described again in this embodiment of this application.

Table 23 shows aspheric coefficients of lenses in the lens assembly according to Embodiment 8 of this application.

| | | Conic coefficient K | A4 | A6 | A8 | A10 |
|---|---|---|---|---|---|---|
| L1 | R1 | 0 | 1.47E-03 | 1.78E-03 | -9.25E-04 | 4.84E-04 |
| | R2 | 0 | 3.80E-05 | -4.81E-03 | 1.03E-02 | -1.28E-02 |
| L2 | R3 | 0 | -2.49E-02 | 5.71E-03 | -4.54E-03 | 1.57E-02 |
| | R4 | 0 | -1.99E-02 | -5.36E-03 | 1.29E-02 | -1.01E-02 |
| L3 | R5 | 0 | 9.17E-03 | -2.43E-02 | 7.77E-03 | 1.90E-03 |
| | R6 | 0 | 6.83E-03 | -6.82E-02 | 1.44E-01 | -2.02E-01 |
| L4 | R7 | 0 | -5.17E-02 | -5.27E-02 | 1.45E-01 | -2.11E-01 |
| | R8 | 0 | -4.72E-02 | -5.04E-03 | 2.48E-02 | -3.31E-02 |
| L5 | R9 | 0 | 2.69E-02 | -6.17E-03 | 5.74E-04 | 5.48E-04 |
| | R10 | 0 | 1.68E-02 | -3.09E-03 | 1.53E-03 | -3.56E-04 |
| L6 | R11 | 0 | -1.82E-02 | -2.72E-03 | 1.01E-03 | -2.62E-04 |
| | R12 | 0 | 2.61E-03 | -7.31E-03 | 2.02E-03 | -3.98E-04 |
| L7 | R13 | 0 | -1.56E-02 | 2.59E-03 | -8.00E-06 | -1.14E-04 |
| | R14 | 0 | -2.73E-02 | 4.84E-03 | -6.25E-04 | 3.90E-05 |

(continued)

|  |  | A12 | A14 | A16 | A18 | A20 |
|---|---|---|---|---|---|---|
| L1 | R1 | -6.70E-05 | -1.20E-05 | 1.00E-05 | -3.00E-06 | 1.00E-06 |
|  | R2 | 9.55E-03 | -4.29E-03 | 1.12E-03 | -1.53E-04 | 9.00E-06 |
| L2 | R3 | -2.00E-02 | 1.38E-02 | -5.48E-03 | 1.19E-03 | -1.07E-04 |
|  | R4 | 6.93E-03 | -3.73E-03 | 1.23E-03 | -2.15E-04 | 1.50E-05 |
| L3 | R5 | -5.64E-03 | 4.04E-03 | -1.62E-03 | 3.56E-04 | -2.90E-05 |
|  | R6 | 1.74E-01 | -9.19E-02 | 2.89E-02 | -4.84E-03 | 3.09E-04 |
| L4 | R7 | 1.84E-01 | -9.91E-02 | 3.17E-02 | -5.45E-03 | 3.61E-04 |
|  | R8 | 2.52E-02 | -1.17E-02 | 3.21E-03 | -4.71E-04 | 2.40E-05 |
| L5 | R9 | -3.79E-04 | 1.02E-04 | -1.40E-05 | 1.00E-06 | -2.14E-08 |
|  | R10 | -3.10E-05 | 2.20E-05 | -3.00E-06 | 1.65E-07 | -3.32E-09 |
| L6 | R11 | 3.60E-05 | -1.00E-06 | -1.96E-07 | 3.00E-08 | -1.82E-09 |
|  | R12 | 5.70E-05 | -6.00E-06 | 3.62E-07 | -1.38E-08 | 2.34E-10 |
| L7 | R13 | 2.30E-05 | -2.00E-06 | 8.27E-08 | 3.29E-10 | -2.30E-10 |
|  | R14 | -1.00E-06 | -3.09E-08 | 9.92E-10 | 7.37E-11 | -6.10E-12 |
|  |  | A22 | A24 | A26 | A28 | A30 |
| L1 | R1 | -4.21E-08 | 0.00E+00 | 0.00E+00 | 0.00E+00 | 0.00E+00 |
|  | R2 | 0.00E+00 | 0.00E+00 | 0.00E+00 | 0.00E+00 | 0.00E+00 |
| L2 | R3 | 0.00E+00 | 0.00E+00 | 0.00E+00 | 0.00E+00 | 0.00E+00 |
|  | R4 | 0.00E+00 | 0.00E+00 | 0.00E+00 | 0.00E+00 | 0.00E+00 |
| L3 | R5 | -1.00E-06 | 0.00E+00 | 0.00E+00 | 0.00E+00 | 0.00E+00 |
|  | R6 | 1.12E-07 | 1.00E-06 | 0.00E+00 | 0.00E+00 | 0.00E+00 |
| L4 | R7 | 1.00E-06 | 1.00E-06 | 0.00E+00 | 0.00E+00 | 0.00E+00 |
|  | R8 | 1.00E-06 | 0.00E+00 | 0.00E+00 | 0.00E+00 | 0.00E+00 |
| L5 | R9 | -2.89E-10 | 1.59E-12 | -2.34E-13 | 0.00E+00 | 0.00E+00 |
|  | R10 | 4.27E-11 | -4.43E-12 | 1.37E-13 | -3.44E-15 | 0.00E+00 |
| L6 | R11 | 5.66E-11 | -7.45E-13 | 0.00E+00 | 0.00E+00 | 0.00E+00 |
|  | R12 | 4.68E-13 | -4.83E-14 | 9.98E-16 | -3.00E-17 | 0.00E+00 |
| L7 | R13 | 1.64E-11 | -7.65E-13 | 2.39E-14 | -4.46E-16 | 3.84E-18 |
|  | R14 | 2.29E-13 | -5.39E-15 | 7.48E-17 | -4.57E-19 | 0.00E+00 |

It can be learned from Table 23 that the lenses in the lens assembly 10 are all aspherical lenses, that is, the lens assembly 10 includes 14 aspheric surfaces. An aspheric surface type z of each lens in the lens assembly 10 may be calculated according to the following aspheric formula:

$$z = \frac{\frac{1}{R}r^2}{1+\sqrt{1-(K+1)1/R^2r^2}} + \sum_i Air^i,$$

where

z is a vector height of an aspheric surface, r is a radial coordinate of the aspheric surface, R is a curvature radius of an aspheric vertex, K is a conic constant, Ai is an aspheric coefficient, and i is 4, 6, 8, ..., or 30. The lenses may be simulated according to obtained aspheric surface types and the like, so that the camera module 101 shown in FIG. 32 is finally obtained.

For optical parameters of the lens assembly that includes the foregoing lenses, refer to Table 24.

Table 24 shows the optical parameters of the lens assembly according to Embodiment 8 of this application.

| Focal length EFL | 5.8 mm |
|---|---|
| f-number f-number | 1.71 |
| Half image height IMH | 6.45 mm |
| Half field of view | 47.51° |
| Design wavelength | 650 nm, 610 nm, 555 nm, 510 nm, and 470 nm |

It can be learned from Table 24 that the lens assembly 10 according to Embodiment 8 of this application is a wide-angle lens featuring both a wide aperture and a large target surface.

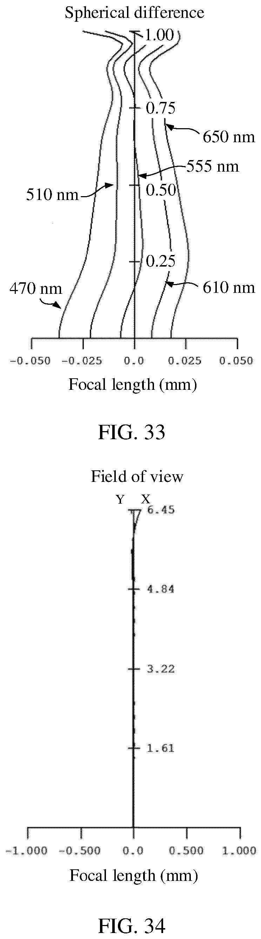

FIG. 33 is a curve diagram of an axial chromatic aberration of a lens assembly according to Embodiment 8 of this application. The axial chromatic aberration shown in FIG. 33 is an axial chromatic aberration obtained after light with wavelengths of 650 nm, 610 nm, 555 nm, 510 nm, and 470 nm passes through the lens assembly 10. It can be learned from FIG. 33 that the axial chromatic aberration obtained after the light passes through the lens assembly 10 is relatively small.

FIG. 34 is a diagram of astigmatism and field curvature of a lens assembly according to Embodiment 8 of this application. FIG. 34 shows a diagram of astigmatism and field curvature obtained after light with a wavelength of 555 nm passes through the lens assembly 10. It can be learned from FIG. 34 that the lens assembly 10 has relatively small field curvature in both a sagittal direction and a meridional direction, and has relatively high imaging quality.

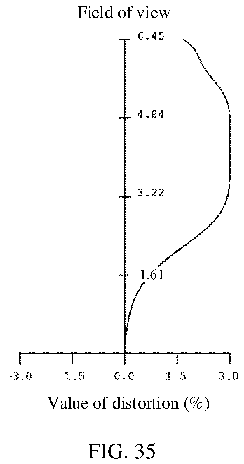

FIG. 35 is a distortion curve diagram of a lens assembly according to Embodiment 8 of this application. FIG. 35 shows a distortion curve obtained after light with a wavelength of 555 nm passes through the lens assembly 10. It can be learned from FIG. 35 that imaging through the lens assembly 10 has a relatively small amount of distortion, and a difference between an imaging shape and an ideal shape is relatively small. This meets a deformation difference requirement, and ensures high imaging quality.

In descriptions of embodiments of this application, it should be noted that, unless otherwise explicitly stipulated and restricted, terms "installation", "joint connection", and "connection" should be understood broadly, which, for example, may be a fixed connection, or may be an indirect connection by using a medium, or may be an internal communication between two components, or may be an interactive relationship between two components. Persons of ordinary skill in the art may understand specific meanings of the foregoing terms in embodiments of this application based on specific cases. The terms such as "first", "second", "third", "fourth", and the like (if any) are intended to distinguish between similar objects but do not necessarily indicate a specific order or sequence.

Finally, it should be noted that the foregoing embodiments are merely intended to describe the technical solutions of embodiments of this application, and are not intended to limit embodiments of this application. Although embodiments of this application are described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of embodiments of this application.

**Claims**

1. A lens assembly, comprising a plurality of lenses that are sequentially arranged from an object side to an image side along an optical axis, wherein there are gaps between any two adjacent lenses, a gap of a smallest length in a direction parallel to the optical axis among the gaps between two adjacent lenses is a first gap, and a first gap of a largest length among a plurality of first gaps between the plurality of lenses is a maximum gap;

   the lens assembly satisfies a conditional expression: $0.35 \leq (TTL-Dgap)/(2*IMH) \leq 0.53$, wherein IMH is a half image height of the lens assembly, TTL is a total track length of the lens assembly, and Dgap is a length of the maximum gap;
   the plurality of lenses comprise at least a first lens, a second lens, a third lens, a fourth lens, a fifth lens, a sixth lens, and a seventh lens that are arranged from the object side to the image side; and
   the first lens and the fifth lens each have a positive focal power, the second lens and the fourth lens each have a negative focal power, a focal length f1 of the first lens and a focal length EFL of the lens assembly satisfy a conditional expression: $1 < f1/EFL < 3$, and a focal length f6 of the sixth lens and the focal length EFL of the lens assembly satisfy a conditional expression: $-1 < EFL/f6 < 0.1$.

2. The lens assembly according to claim 1, wherein some of the plurality of lenses are located on a side that is of the maximum gap and that faces the object side, and the some lenses are capable of moving along the optical axis, to compress the maximum gap.

3. The lens assembly according to claim 1 or 2, wherein the lens assembly satisfies a conditional expression: $0.7 \leq (TTL-Dgap) * TTL/IMH^2 \leq 1.7$.

4. The lens assembly according to any one of claims 1 to 3, wherein a range of a quantity N of the lenses is: $7 \leq N \leq 10$.

5. The lens assembly according to any one of claims 1 to 4, wherein a range of an f-number F# of the lens assembly is: $1.4 \leq F\# \leq 2.2$.

6. The lens assembly according to any one of claims 1 to 5, wherein a range of a half field of view HFOV of the lens assembly is: $35° < HFOV < 49°$.

7. The lens assembly according to any one of claims 1 to 6, wherein the focal length EFL of the lens assembly and the total track length TTL of the lens assembly satisfy a conditional expression: $0 < EFL/TTL < 1$.

8. The lens assembly according to any one of claims 1 to 7, wherein an Abbe number vd1 of the first lens and an Abbe number vd2 of the second lens satisfy a conditional expression: $vd1-vd2 > 25$.

9. The lens assembly according to any one of claims 1 to 8, wherein a curvature radius R9 of an object-side surface of the fifth lens and a curvature radius R10 of an image-side surface of the fifth lens satisfy a conditional expression: $R10/R9 > -1$.

10. The lens assembly according to any one of claims 1 to 9, wherein the lenses are aspherical lenses.

11. A camera module, comprising an image sensor and the lens assembly according to any one of claims 1 to 10, wherein the image sensor is located on a side that is of the lens assembly and that faces the image side.

12. An electronic device, comprising a housing and the camera module according to claim 11, wherein the camera module is disposed on the housing.

13. The electronic device according to claim 12, wherein when the camera module is in an operating state, some lenses of the lens assembly are located outside the housing; and
when the camera module switches from the operating state to a non-operating state, the some lenses located on the side that is of the maximum gap and that faces the object side move toward the inside of the housing.

FIG. 1

FIG. 2

FIG. 3

FIG. 4

Spherical difference

FIG. 5

Field of view

FIG. 6

Field of view

Value of distortion (%)

FIG. 7

FIG. 8

Spherical difference

Focal length (mm)

FIG. 9

Field of view

Focal length (mm)

FIG. 10

Field of view

FIG. 11

FIG. 12

Spherical difference

Focal length (mm)

FIG. 13

Field of view

Focal length (mm)

FIG. 14

Field of view

43.29

32.47

21.64

10.82

-3.0    -1.5    0.0    1.5    3.0

Value of distortion (%)

FIG. 15

101

30
20
17
16
15
11 12
L
Object side                                    Image side
40  13 14

11
12
13
10  14
15
16
17

FIG. 16

Spherical difference

FIG. 17

Field of view

FIG. 18

EP 4 603 887 A1

Field of view

44.16

33.12

22.08

11.04

-3.0   -1.5   0.0   1.5   3.0

Value of distortion (%)

FIG. 19

FIG. 20

48

Spherical difference

FIG. 21

Field of view

FIG. 22

Field of view

FIG. 23

FIG. 24

Spherical difference

FIG. 25

Spherical difference

FIG. 26

Field of view

Value of distortion (%)

FIG. 27

FIG. 28

Spherical difference

FIG. 29

Field of view

FIG. 30

Field of view

Value of distortion (%)

FIG. 31

FIG. 32

Spherical difference

FIG. 33

Field of view

FIG. 34

Field of view

Value of distortion (%)

FIG. 35

## INTERNATIONAL SEARCH REPORT

| International application No. |
|---|
| **PCT/CN2023/140022** |

| A. | CLASSIFICATION OF SUBJECT MATTER |
|---|---|

G02B13/00(2006.01)i

According to International Patent Classification (IPC) or to both national classification and IPC

| B. | FIELDS SEARCHED |
|---|---|

Minimum documentation searched (classification system followed by classification symbols)

IPC:G02B

Documentation searched other than minimum documentation to the extent that such documents are included in the fields searched

Electronic data base consulted during the international search (name of data base and, where practicable, search terms used)

CNKI; CNTXT; WPABSC; ENTXT; DWPI: 镜头, 间隔, 间隙, 第五, 全像高, 半像高, 光圈, 焦距, LENS, FIFTH, TTL, IMGH, IH, DISTANCE, APERTURE, FOCU+

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 114047595 A (HUAWEI TECHNOLOGIES CO., LTD.) 15 February 2022 (2022-02-15) description, paragraphs [0189]-[0222], and figure 8 | 1-13 |
| X | CN 217561811 U (HUAWEI TECHNOLOGIES CO., LTD.) 11 October 2022 (2022-10-11) description, paragraphs [0192]-[0227], and figure 8 | 1-10 |
| A | CN 113589503 A (ZHEJIANG DAHUA TECHNOLOGY CO., LTD.) 02 November 2021 (2021-11-02) entire document | 1-10 |
| A | CN 114815137 A (HUAWEI TECHNOLOGIES CO., LTD.) 29 July 2022 (2022-07-29) entire document | 1-10 |
| A | CN 115390219 A (HUAWEI TECHNOLOGIES CO., LTD.) 25 November 2022 (2022-11-25) entire document | 1-10 |
| A | US 2019212524 A1 (KANTATSU CO., LTD.) 11 July 2019 (2019-07-11) entire document | 1-10 |
| A | US 2019212532 A1 (KANTATSU CO., LTD.) 11 July 2019 (2019-07-11) entire document | 1-10 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **05 March 2024** | **12 March 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/140022**

| Patent document cited in search report | | | Publication date (day/month/year) | Patent family member(s) | | | Publication date (day/month/year) |
|---|---|---|---|---|---|---|---|
| CN | 114047595 | A | 15 February 2022 | None | | | |
| CN | 217561811 | U | 11 October 2022 | WO | 2023050610 | A1 | 06 April 2023 |
| CN | 113589503 | A | 02 November 2021 | None | | | |
| CN | 114815137 | A | 29 July 2022 | None | | | |
| CN | 115390219 | A | 25 November 2022 | None | | | |
| US | 2019212524 | A1 | 11 July 2019 | JP | 2019035781 | A | 07 March 2019 |
| | | | | JP | 6615161 | B2 | 04 December 2019 |
| | | | | US | 2021396957 | A1 | 23 December 2021 |
| US | 2019212532 | A1 | 11 July 2019 | US | 11215791 | B2 | 04 January 2022 |
| | | | | JP | 2019032462 | A | 28 February 2019 |
| | | | | JP | 6699949 | B2 | 27 May 2020 |

Form PCT/ISA/210 (patent family annex) (July 2022)

**REFERENCES CITED IN THE DESCRIPTION**

**Patent documents cited in the description**

- CN 202211711805